# EUROPÄISCHE PATENTSCHRIFT

(11) **EP 0 799 727 B1**
(45) Veröffentlichungstag und Bekanntmachung des Hinweises auf die Patenterteilung: **07.08.2002**
(21) Anmeldenummer: 97105533.0
(22) Anmeldetag: 03.04.1997
(51) Int. Cl.: B60C 19/00

(54) **Fahrzeugluftreifen**
Vehicle tyre
Bandage pneumatique pour vehicule

(30) Priorität: 04.04.1996 DE 19613544
(43) Veröffentlichungstag der Anmeldung: 08.10.1997
(73) Patentinhaber: Continental Aktiengesellschaft, 30165 Hannover (DE)
(72) Erfinder: Teves, Reinhard, Dr., 30926 Seelze (DE); Loreth, Wolfgang, Dr., 31867 Lauenau (DE); Herbiet, René, Dr., 4700 Eupen (BE)

(56) Entgegenhaltungen:
- US-A- 3 768 532
- US-A- 4 081 014
- DATABASE INSPEC INSTITUTE OF ELECTRICAL ENGINEERS, STEVENAGE, GB Inspec No. 5447221, KORMANN CL ET AL: "MR fluids with nano-sized magnetic particles" XP002104672 & 5TH INTERNATIONAL CONFERENCE ON ELECTRO-RHEOLOGICAL FLUIDS, MAGNETO-RHEOLOGICAL SUSPENSIONS AND ASSOCIATED TECHNOLOGY, SHEFFIELD, UK, JULY 1995, Bd. 10, Nr. 23-24, Seiten 3167-3172, ISSN 0217-9792, International Journal of Modern Physics B, 30 Oct. 1996, World Scientific, Singapore

## Beschreibung

Die Erfindung bezieht sich auf einen Fahrzeugluftreifen, der im wesentlichen aus Festigkeitsträgern und verschiedenen Gummibauteilen wie zum Beispiel Kernreiter, Laufstreifen und Seitenwand aufgebaut ist. Ferner bezieht sich die Erfindung auf Verfahren zur Herstellung solcher Fahrzeugluftreifen sowie auf Systeme, die einen solchen Fahrzeugluftreifen enthalten.

An moderne Fahrzeugreifen werden konkurrierende Anforderungen gestellt: Ruhiges Abrollen bei niedrigen Geschwindigkeiten wird durch eine besonders biegeweiche Gestaltung des üblicherweise auf jedem Wulstkern angeordneten Kernreiters gefördert; eine biegesteife Gestaltung des Kernreiters hingegen fördert die Lenkpräzision, eine Eigenschaft, die besonders bei hohen Geschwindigkeiten gefordert wird. Eine höhere Steifigkeit ist bei höherer Geschwindigkeit ferner in der Seitenwand - anstatt oder zusätzlich zu der im zuvor genannten Wulstverstärker - erwünscht zur Erhöhung der Lenkpräzision.

Auch für den Laufstreifen und die darunter befindlichen Bauteile, insbesondere im Bereich zwischen zwei im wesentlichen übereinander liegenden Gürtelkanten, gibt es einen Zielkonflikt bezüglich der Härtebemessung: Eine kleine Biegesteifigkeit und Biegeschwingungsdämpfung ist bis ca. 160 km/h, dem meistgenutzten Geschwindigkeitsbereich, erwünscht zur Erzielung einer verzerrungsarmen und damit effizienten Reibkrafteinleitung innerhalb der Bodenaufstandsfläche und eines geringen Rollwiderstandes; eine höhere Biegesteifigkeit und in Sonderfällen eine erhöhte Biegeschwingungsdämpfung ist erwünscht im höheren Geschwindigkeitsbereich zur Bekämpfung stehender Biegewellen vom Latschauslauf bis zum Latscheinlauf.

Aus der Werbeschrift "Nano-MR-Fluide von BASF" der BASF AG, Ludwigshafen, aus dem April 1995 sind magnetrheologische Flüssigkeiten als Hydrauliköl mit besonderen Eigenschaften bekannt; die besondere Eigenschaft liegt darin, daß die magnetrheologische Flüssigkeit ohne orthogonales Magnetfeld dünnflüssig, innerhalb eines orthogonalen Magnetfeldes hingegen dickflüssig mit einer nennenswerten Losbrechkraft bei der Geschwindigkeit 0, also elasto-plastisch (auch als "viskoelastisch" oder kurz "rheologisch" bezeichnet) ist.

Aus dem fünfbändigen Brockhaus-Lexikon "Naturwissenschaften und Technik", Ausgabe 1983, 2. Band, Seite 293, unter dem Stichwort "Hydraulikflüssigkeiten, Bremsfüssigkeiten" ist ferner bekannt, daß Hydrauliköl im wesentlichen aus Glykolen und/oder Glykoläthern und/oder Glycerin besteht.

Aufgabe der Erfindung ist es, Zielkonflikte im Reifen zu entschärfen durch einstellbare Bauteilsteifigkeit und/oder Dämpfung.

Die Aufgabe wird erfindungsgemäß dadurch gelöst, daß zumindest eines der Bauteile eines Reifens eine magnetrheologische Flüssigkeit enthält. In geeigneter Weise, die näher in den Unteransprüchen beschrieben ist, wird bei Bedarf an größerer Steifigkeit und/oder Dämpfung zumindest ein Magnetfeld erzeugt, welches an bestimmten Reifenstellen und/oder in bestimmten Drehwinkelstellungen - auch Phase genannt - zur Versteifung und/oder Viskositätserhöhung des magnetrheologische Flüssigkeit enthaltenden Bauteiles führt.

Besonders bevorzugt zur Erhöhung der Lenkpräzision bei hoher Geschwindigkeit ist gemäß Anspruch 2 ein Fahrzeugluftreifen nach Anspruch 1, mit in Wülsten angeordneten Wulstkernen, darauf befindlichen Kernreitern und einer um die Wulstkerne geschlungenen Karkasse, die im axialen Bereich des Laufstreifens durch Gürtellagen verstärkt sein kann, wobei zumindest einer der beiden Kernreiter mit mindestens einer sich im wesentlichen in Umfangsrichtung erstreckenden Hohlkammer ausgestattet ist und diese Hohlkammer mit einer magnetrheologischen Flüssigkeit gefüllt ist.

Bevorzugt wird das die Versteifung bewirkende Magnetfeld gemäß Anspruch 17 durch zumindest einen - bevorzugt ringförmigen - Magneten pro verstellbarem Kernreiter erzeugt, der - zur Vermeidung oder Kleinhaltung von Wirbelströmen im Kernreiter - mit der Felge mitrotiert. Störende Umwelteinflüsse - wie Bordsteinkanten etc. - auf den/die Magneten werden vermieden mit dessen/deren Anordnung im Reifenhohlraum. Zwar sind Elektromagnete zur Magnetfelderzeugung üblich und kommen auch hier in Betracht, jedoch erfordert deren Mitrotieren störanfällige Strombürsten zwischen nicht-rotierender Radaufhängung und rotierendem Rade. Zur Vermeidung von Strombürsten sind bei rotierender Anordnung Permanentmagnete bevorzugt. Hiermit entfällt zwar die Magnetfeldstärke als verstellbare Größe zur Beeinflussung des viskoelastischen Verhaltens der magnetrheologischen Flüssigkeit, als verstellbare Größe geeignet ist aber auch der axiale Abstand des oder der beeinflussenden Magneten zum zu beeinflussenden, eine magnetrheologische Flüssigkeit enthaltenden Reifenbauteil. Diese verstellbare Größe eignet sich auch für die bevorzugten ringförmigen Magneten. Wird ein Kranz von Einzelmagneten eingesetzt, so kann auch der radiale Abstand und/oder die Winkelstellung der Magnetfeldlinien verstellt werden; auch dies beeinflußt eine magnetorheologische Flüssigkeit.

Ferner eignen sich zur Ansteuerung aller Reifenbauteile mit magnetrheologischer Flüssigkeit auch nicht-rotierende Magneten, welche leicht als Elektromagneten ausgeführt sein können und somit auch eine Magnetfeldstärkenverstellung ohne Strombürsten zulassen.

Die bereits genannte Hohlkammer im Reifenbauteil - hier einem Kernreiter - kann durch einen Schlauch, vorzugsweise überwiegend aus Naturkautschuk, begrenzt sein. Die Wandstärke eines solchen Schlauches sollte 20% bis 60% seines Innendurchmessers betragen. Gemäß Anspruch 13 sollte in das Reifenbauteil ein oder mehrere solcher Schläuche eingelegt werden.

Die Hohlkammer kann nach ihrer Fertigung mit einer Injektionsspritze gefüllt werden. Bevorzugt aber wird (werden) gemäß Anspruch 13 die Hohlkammer(n) schon vor ihrem Einbau mit magnetrheologischer Flüssigkeit gefüllt, was allerdings beim Ablängen des Schlauches zum Auslaufen magnetrheologischer Flüssigkeit führen kann. - Dieses Problem ist zu mindern durch eine große benetzte Schlauchoberfläche im Verhältnis zum Volumen, was die Ausströmgeschwindigkeit auf tolerierbar kleine Werte zu mindern vermag. Vorzugsweise wird eine große Hohlkammeroberfläche dadurch erreicht, daß die Hohlkammer, die bevorzugt als Schlauch ausgebildet ist, einen Außendurchmesser aufweist zwischen 0,5 und 1,5 mm und gemäß Anspruch 3 in mehreren Windungen vorliegt, sodaß sie in einem Querschnitt als eine Vielzahl von Gangquerschnitten erscheint, wobei die Windungen sich im wesentlichen in Umfangsrichtung erstrecken.

Zweckmäßig könnten in einer untersten Schicht fünf Schlauchwindungen nebeneinander liegen, in einer darüber befindlichen Schicht könnten vier weitere Schlauchwindungen auf Lücke zu denen der darunter befindlichen Schicht liegen, und so weiter, sodaß sich insgesamt 15 Windungen ergäben in einem im Querschnitt etwa dreieckförmigen Verbund. So erreicht die eine Hohlkammer eine für die erstrebte Wirkung ausreichende Gesamtquerschnittfläche bei minimaler Ausströmgeschwindigkeit der eingefüllten magnetrheologischen Flüssigkeit an der Stirnseite. Ferner "blutet" nur eine der Vielzahl - im genannten Beispiel: 15 - von Einzelquerschnittflächen.

Nur auf letztgenannten Vorteil würde verzichtet, wenn - im Unterschied zur Mehrfachwindung einer einzigen hydraulischen Kammer - gemäß Anspruch 4 eine Vielzahl von Hohlkammern in zumindest einem der Kernreiter angeordnet würde, die sich im wesentlichen in Umfangsrichtung erstrecken und mit einer magnetrheologischen Flüssigkeit gefüllt sind. Dafür hätte man den Vorteil, daß - wie bislang - der Kernreiter extrudiert werden könnte und lediglich einer Endlosfügung bedürfte.

Solch ein Kernreiter ist mit einem Verfahren gemäß Anspruch 11 zu fertigen, wonach zunächst in einer oder mehreren Mischungsstufen eine Kautschukmischung erstellt wird, die schließlich durch eine formgebende Extrusionsdüse extrudiert wird, wobei in Strömungsrichtung gesehen vor der Düsenaustrittsöffnung kleine Einspritzkanäle in den Kautschukstrom hereinragen und durch diese eine magnetrheologische Flüssigkeit in das Extrudat eingespritzt wird, sodaß das Extrudat in Extrusionsrichtung verlaufende, luftblasenfrei mit magnetrheologischer Flüssigkeit ausgefüllte Hohlkammern aufweist.

Um die für den Kautschukstrom einen Strömungswiderstand darstellenden Einspritzkanäle schmal halten zu können, empfiehlt sich eine Weiterbildung dieses Verfahrens gemäß Anspruch 12, wonach die Strömungsgeschwindigkeit in den Einspritzkanälen größer ist als die mittlere Kautschukströmungsgeschwindigkeit, sodaß die mit magnetrheologischer Flüssigkeit gefüllten Hohlkammern hinter dem Einspritzkanal eine größere Querschnittfläche aufweisen als die Einspritzkanäle.

Das "Ausbluten", gemeint ist das Auslaufen magnetrheologischer Flüssigkeit an geschnittenen Stirnseiten beim Schneiden, Handhaben und Einbauen oder infolge Porösität, kann gemäß Anspruch 16 dadurch unterbunden werden, daß spätestens zum Zeitpunkt des Entstehens der Auslaufgefahr ein solches Magnetfeld aufgebaut wird, das die magnetrheologische Flüssigkeit soweit versteift, daß der Schwerkraftantrieb zum unerwünschten Fließen nicht ausreicht. Entsprechend sollten alle Transportmittel, wie Förderbänder, Buchwagen, Zubringer für mit magnetrheologischer Flüssigkeit gefüllte Halbfertigprodukte zumindest an den Stellen, wo offene Schnittenden zu liegen kommen sollen, magnetisch ausgebildet sein.

Bei nur geringfügig verschlechterter Wirksamkeit im Verhältnis zum Gesamtvolumen magnetrheologischer Flüssigkeit wird das Problem des Ausblutens auch dadurch entschärft, daß die die magnetrheologische Flüssigkeit aufnehmende Hohlkammer im Reifenbauteil - hier im Kernreiter - nicht nur in der Radialen und/oder der Axialen unterteilt ist (z. B. durch die zuvor geschilderte Wendelung), sondern auch in der Umfangsrichtung; ein solches Verfahren lehrt Anspruch 14, wonach in das Reifenbauteil ein oder mehrere Streifen aus geschäumtem Elastomer eingelegt werden, die vorzugsweise bereits vor dem Einlegen mit magnetrheologischer Flüssigkeit getränkt wurden.

Das einfachste Verfahren zum Einbringen einer magnetrheologischen Flüssigkeit in ein Bauteil - zum Beispiel in einen Kernreiter - eines Fahrzeugluftreifens lehrt Anspruch 15, wonach in einer oder mehreren Mischungsstufen eine Kautschukmischung erstellt wird, und zwar in der Weise, daß - vorzugsweise in der letzten Mischungsstufe - der Kautschukmischung eine magnetrheologische Flüssigkeit beigegeben wird. Die magnetrheologische Flüssigkeit wird also behandelt wie ein Füllstoff. Allerdings ist die Wirksamkeit im Verhältnis zum Gesamtvolumen magnetrheologischer Flüssigkeit geringer.

In analoger Weise zur magnetrheologischen Ausbildung des Kernreiters kann - alternativ oder zusätzlich - gemäß Anspruch 5 zumindest eine Seitenwand, vorzugsweise in einer Schicht auf der Innenseite der Karkasse, aus einer Gummimischung bestehen, die eine magnetrheologische Flüssigkeit enthält oder in Umfangsrichtung verlaufende Hohlkammern aufweisen, die eine magnetrheologische Flüssigkeit beinhalten. Dabei muß zwar eine kleinere Wirksamkeit im Verhältnis zum Gesamtvolumen magnetrheologischer Flüssigkeit hingenommen werden als bei räumlich diskreter Anordnung, jedoch ist gerade in diesem Bauteil die Ausbildung jedweder Hohlkammern zur Aufnahme der magnetrheologischen Flüssigeit ohne dickere Ausbildung der Seitenwand und einhergehender Rollwiderstandserhöhung herstellbar.

Eine im Betrieb erhöhbare Steifigkeit von Reifenbauteilen, insbesondere Kernreiter und Seitenwand, ermöglicht auch - bei Versteifung im Falle von Minderluftdruck - einen besseren Notlauf und vermag sogar das Abspringen des Reifens von der Felge im Falle des völligen Luftdruckverlustes zu vermeiden. Besonders für diesen Zweck ist die Kombination eines magnetrheologisch steifigkeitsverstellbaren Kernreiters mit einer magnetrheologisch steifigkeitsverstellbaren Seitenwand bevorzugt. Diese Kombination fördert aber auch besonders deutlich die Lenkpräzision bei hoher Geschwindigkeit.

Sie ist ferner besonders leicht zu betreiben, weil sich für beide Reifenbauteile in besonderer Weise ein mit dem Rade mitrotierendes Magnetfeld empfiehlt; es kann also ein und dasselbe Magnetfeld sein.

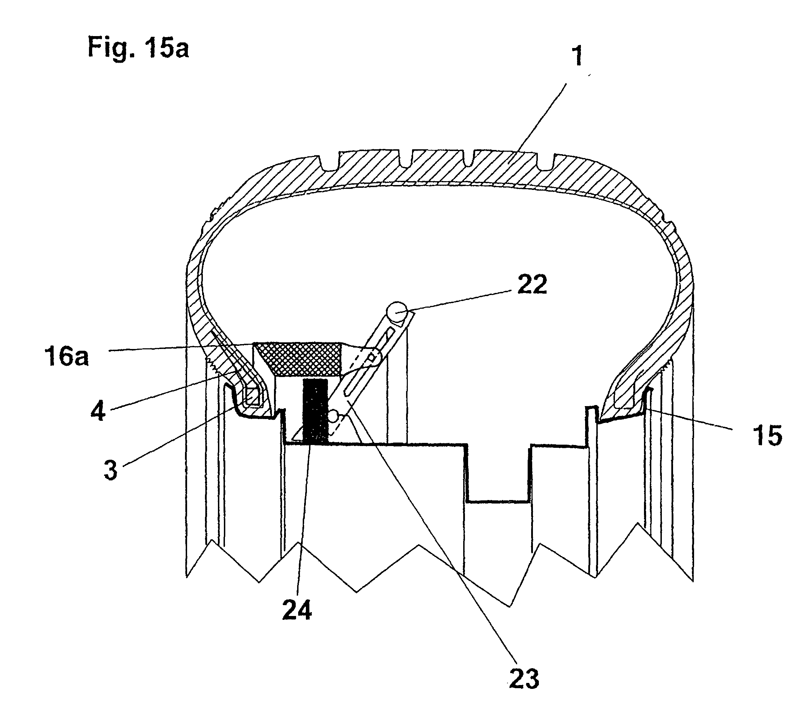

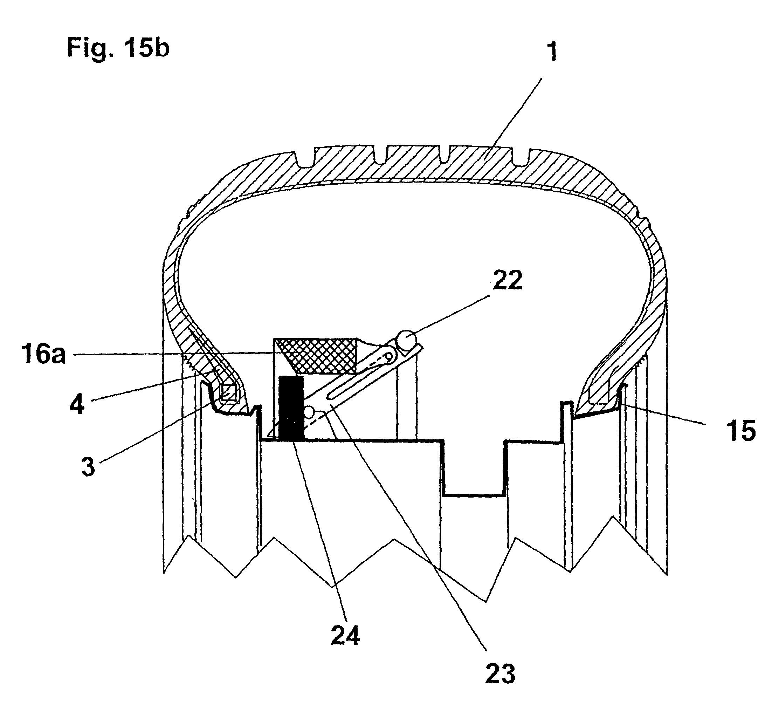

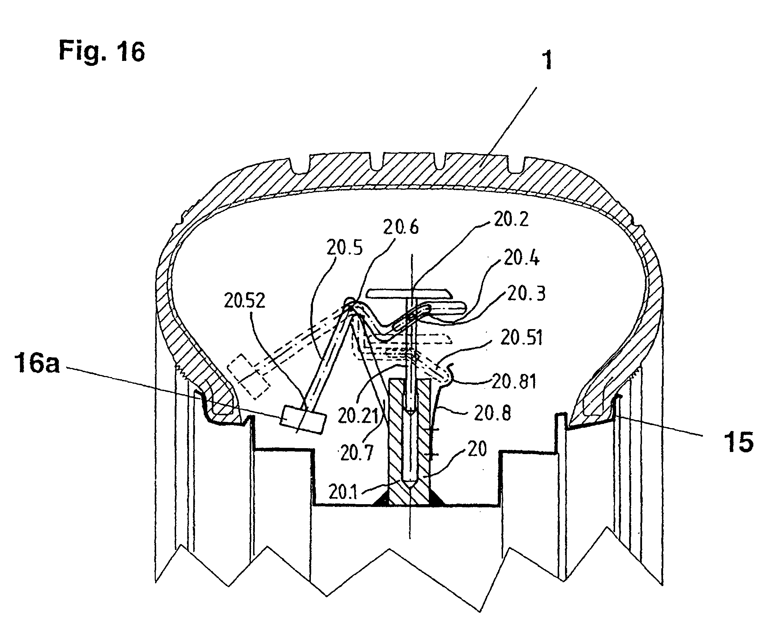

Während sich zum Heranfahren von Magneten in die Nähe von magnetrheologischer Flüssigkeit enthaltender Bauteile bei hohen Geschwindigkeiten ein fliehkraftgesteuerter Mechanismus empfiehlt, wie in Figur 15 näher dargestellt, empfiehlt sich zum Heranfahren im Falle des Notlaufes ein auf übergroße Reifeneinfederung reagierender Mechanismus, siehe Figur 16. Dieser kann aus einer mit Federkraft vorgespannten Spreizvorrichtung bestehen, die sich entspannt, sobald ein radial beweglicher mechanischer Einfederungssensor so weit nach radial innen gedrückt ist, daß er ein entsprechendes Gesperre freigibt, siehe im einzelnen Figur 16.

In modernen Fahrzeugluftreifen mit Radialkarkasse und Gürtellagen mit Stahldraht enthaltenden Festigkeitsträgern ist zwar gegenüber älteren Konstruktionen die Walkarbeit pro Umdrehung deutlich gesenkt, jedoch gibt es Stellen am Reifen, die eine höhere Walkarbeit pro Volumen und Umdrehung erfahren als andere. Stellen erhöhter spezifischer Walkarbeit aufgrund der Verformungsgeometrie stören nicht nur im Hinblick auf den Rollwiderstand sondern auch im Hinblick auf die Reifenerwärmung, die einen wesentlichen Einfluß auf die Alterung des Gummis hat. Deshalb beachtet der Reifenkonstrukteur von den Stellen erhöhter spezifischer Walkarbeit besonders die Stellen, die fern der Peripherie liegen, also tief im generell schlecht wärmeleitenden Gummi eingebettet sind und deshalb nur schlecht gekühlt sind.

Unter diesen Gesichtspunkten ist die kritischste Stelle am modernen Radialreifen das die Gürtelkanten voneinander trennende, in der Regel im Querschnitt leicht keilförmig gestaltete, Elastomerprofil. Das Überhitzungsproblem entsteht insbesondere bei hohen Geschwindigkeiten. Zur Entschärfung dieses Problemes schlagen die Erfinder gemäß Anspruch 6 vor, daß dieses Elastomerprofil eine magnetrheologische Flüssigkeit enthält. In analoger Weise könnte auch die Gürtelgummierung selbst magnetrheologische Flüssigkeit enthalten.

Zur Verringerung der Walkarbeit reicht es aus, wenn gemäß dem Anspruch 19, vorzugsweise 20 in so kurzem Phasenversatz vor dem Latscheinlauf ein Magnetfeld durch mindestens einen nicht-rotierenden Magneten in Radnähe aufgebaut wird, daß sich das magnetrheologische Flüssigkeit enthaltende Bauteil, insbesondere das die Gürtelkanten beabstandende Elastomerprofil infolge des Passierens dieses Magnetfeldes versteift und bei hoher Fahrgeschwindigkeit - nur da besteht das Problem der Überhitzung - die erhöhte Steifigkeit bis über den besonders walkintensiven Latscheinlauf hinaus beibehält unter Ausnutzung der Trägheit im Abklingen des Versteifungseffektes. Darüber hinaus erhöht diese Maßnahme auch die Querbiegesteifigkeit (das ist die Steifigkeit gegenüber Biegemomenten um die Hochachse) bei hoher Geschwindigkeit und damit die Lenkpräzision.

Analog zur Einbringung magnetrheologischer Flüssigkeit in den Kernreiter kann die magnetrheologische Flüssigkeit auch in dieses die Gürtelkanten auf Abstand haltenden Elastomerprofil eingebracht werden entweder durch direktes Einmischen gemäß Anspruch 15 oder durch geschäumte Ausbildung mit Tränkung in magnetrheologischer Flüssigkeit gemäß Anspruch 14 oder durch Einbau eines damit gefüllten oder zu füllenden Schlauches gemäß Anspruch 13 oder, bevorzugt, durch Coextrusion gemäß Anspruch 11. Die beiden letztgenannten Verfahrensvarianten erlauben Fahrzeugluftreifen nach Anspruch 6 mit zumindest einem die Gürtelkanten beabstandenden Elastomerprofil, das gemäß Anspruch 7 eine Vielzahl von Hohlkammern aufweist, die sich im wesentlichen parallel zur Umfangsrichtung erstrecken und mit einer magnetrheologischen Flüssigkeit gefüllt sind.

Zur Vermeidung von Wiederholungen wird zum Verhindern des Ausblutens dieses Elastomerprofiles Bezug genommen auf die bereits beschriebenen Maßnahmen zur Verhindern des Ausblutens des Kernreiters, der ebenfalls ein Elastomerprofil ist.

Die Lösung nach Anspruch 20, wonach - wie schon skizziert - der/die Magneten in solcher Phasenlage vor dem Latscheinlauf positioniert ist/sind, daß sich bei langsamer Fahrt das/die durch Magnetwirkung versteifte(n) Bauteil(e) zwischen dem Passieren des Magnetes bzw. der Magneten und dem Latscheinlauf im wesentlichen wieder erweichen, bei zunehmender Geschwindigkeit hingegen - die Trägheit im Abklingen des Versteifungseffektes ausnutzend - die Bauteile in noch versteiftem Zustande am Latscheinlauf eintreffen - wobei die Phasenlage der Magneten vorzugsweise so gewählt ist, daß diese Grenzgeschwindigkeit bei PKW-Reifen zwischen 100 und 130 km/h, bei LKW-Reifen zwischen 70 und 80 km/h liegt - und bei noch weiter zunehmender Geschwindigkeit ein vom Latscheinlauf her in Richtung Latschauslauf wachsender Bereich noch versteift vorliegt, hat folgenden Vorteil:

An dem Magneten braucht zur fahrgeschwindigkeitsabhängigen Differenzierung der Versteifungswirkung im besonders interessierenden Bereich, der Umgebung des Latscheinlaufes, nichts geschwindigkeitsabhängig verstellt zu werden, nicht die Magnetstärke, nicht die Feldlinienrichtung, nicht der Abstand, nicht die Phasenlage; mit der geschwindigkeitsunabhängigen Verzögerungszeit der magnetrheologischen Flüssigkeit im Abklingen einer zuvor erzielten Versteifung reicht zur fahrgeschwindigkeitsabhängigen Differenzierung der versteifenden Wirkung allein die unterschiedliche Zeit vom Passieren des Magneten bis zum Latscheinlauf aus: Bei hoher Geschwindigkeit wird dieser durch den Phasenversatz erzeugte Weg schnell zurückgelegt mit dem Ergebnis großer nachwirkender Versteifung, bei geringer Fahrgeschwindigkeit langsam mit dem Ergebnis schwächerer oder gar verschwindender Versteifungswirkung.

Diese überaus simple Ausführung führt zur Begleiterscheinung, daß bei niedriger Geschwindigkeit sowohl die Versteifung als auch die nachfolgende Erweichung langsamer erfolgen infolge zunehmender Dickflüssigkeit der Trägerflüssigkeit, zum Beispiel des Glykols. Bei unveränderter Phasenlage des nicht-rotierenden Magneten führt dies bei geringeren Temperaturen dazu, daß der versteifende Effekt bereits bei geringeren Geschwindigkeiten eintritt in geringerer Intensität. Der Abfall der Intensität wird verkleinert, wenn das Magnetfeld auf einer größeren Bogenlänge vor dem Latscheinlauf aufgebaut wird. Bei richtiger Abstimmung der Viskosität der Trägerflüssigkeit auf die Magnetfeldstärke und -bogenlänge, die der Fachmann leicht anhand einer Versuchsreihe herauszufinden vermag, fördert diese Begleiterscheinung die Verkehrssicherheit, weil bei kalter Witterung dem Fahrer ein für sonst höhere Geschwindigkeiten typisches Geräusch- und Lenkverhalten vom Reifen vorgespielt wird, sodaß er generell geringere Geschwindigkeiten wählt.

Es ist möglich, einen solchen nicht-rotierenden Magneten anstatt an der Radaufhängung - womit er zur ungefederten Masse gehörte - im Radkasten anzuordnen, an der gelenkten Achse vorzugsweise mit einer vom Radeinschlagwinkel abhängigen Verschwenkeinrichtung zur ungefähren Konstanthaltung des Luftspaltes über dem Radeinschlagwinkel. So würden zusätzliche ungefederte Massen vermieden. Durchaus vorteilhaft ist dabei die Begleiterscheinung, daß bei stärker eingefedertem Rade - wie dem kurvenäußeren oder höher statisch belasteten - eine stärkere Versteifungswirkung schon bei geringerer Geschwindigkeit erreicht würde, was den Zielkonflikt zwischen Komfort und Fahrdynamik entschärft.

Darüberhinaus ist aber gerade bei einem nicht-rotierenden Magneten leicht gemäß Anspruch 21 die Magnetstärke verstellbar, indem der Magnet als Elektromagnet ausgeführt wird und seine Spule bedarfsabhängig von elektrischem Strom durchflossen wird. Auch eine Verstellung der Phasenlage ist durch einen Stellmotor, der die Position des Magneten ändert, möglich.

Neben der bevorzugten Beeinflussung des die Gürtelkanten beabstandenden Elastomerprofiles durch ein nicht mit dem Rade mitrotierendes Magnetfeld in bestimmter Phasenlage, wie zuvor erläutert, führt auch die Beeinflussung durch ein mitrotierendes Magnetfeld zum gleichen Effekt, allerdings sollte dann zweckmäßigerweise dieses Elastomerprofil auf dem gesamten Reifenumfange erfaßt sein und nicht nur in einer bestimmten Phasenlage.

Der Vorteil der erhöhten Lenkpräzision kann bei Magnetenzustellung im Hochgeschwindigkeitsbereich sogar noch größer sein, allerdings unter Inkaufnahme einer größeren (ungefederten!) Magnetenmasse; im Unterschied zum relativ wenig einfedernden Kernreiter sind nämlich die Federwege des die Gürtelkanten beabstandenden Elastomerprofiles deutlich größer und der größere Luftspalt setzt eine große Magnetstärke voraus.

Eine äquivalente, möglicherweise sogar noch stärkere, Wirkung wäre natürlich erzielbar, wenn bei hohen Geschwindigkeiten anstelle oder zusätzlich zur Versteifung des die Gürtelkanten beabstandenden Elastomerprofiles die Gürtellagen selbst versteift werden könnten; dies scheitert jedoch bislang daran, daß als Festigkeitsträger für Gürtellagen von PKW und LKW bislang nur Stahldraht oder Stahldrahtseile im Hinblick auf die Dauerbiegewechselfestigkeit und die Kosten in Betracht kommen. Bestünden die Festigkeitsträger der Gürtellagen aus einem nicht-metallischen Material und schirmten nicht ein Magnetfeld ab, so wäre auch dieses möglich.

Bislang haben sich zwar solche nicht-metallische Materialien - von denen Polyaramid noch am erfolgversprechendsten erscheint - nur für Reifen mit kurzer akzeptierter "milage", also Kilometerleistung, wie Rennreifen, Fahrrad- und Motorradreifen bewährt, jedoch könnten solche polymeren Festigkeitsträger möglicherweise bald für die Gürtellagen in Betracht kommen.

Noch günstiger als die Beeinflussung der Steifigkeit der Gürtellagen selbst ist an Reifen mit einer Karkasse und im Bereich des Laufstreifens angeordneten Gürtellagen und einer radial außerhalb von Karkasse und Gürtellagen angeordneten Bandage, die Beeinflussung der Steifigkeit der Bandage gemäß Anspruch 8, wonach die Bandage eine Gummimischung enthält, die eine magnetrheologische Flüssigkeit enthält. Ähnlich wie beim bereits behandelten Elastomerprofil zur Beabstandung der Gürtelkanten wird hierfür eine Aktivierung bei hoher Geschwindigkeit durch ein nicht mit dem Rade mitdrehendes Magnetfeld bevorzugt. Solange die darunter befindlichen Gürtelfestigkeitsträger aus Metall bestehen, empfiehlt sich eine bei Bedarf große Magnetfeldstärke, zur Masseersparnis vorzugsweise durch einen über die Stromstärke regelbaren Elektromagneten.

In analoger Weise ist auch eine Steifigkeitsbeeinflussung hervorrufbar, indem gemäß Anspruch 9 und/oder Anspruch 10 bei ein- und/oder mehrschichtigen Laufstreifen zumindest einer dieser Streifen eine magnetrheologische Flüssigkeit enthält. Durch Steifigkeitserhöhungen des Laufstreifens wird beim Luftdruckabfall des Reifens eine Einfederung bis zur Berührung der Reifeninnenseite auf der Felge oder aufeinander vermieden. Hierdurch wird eine Notlauffähigkeit erreicht.

Alle in den vorherigen Ansprüchen erwähnten Bauteile des Fahrzeugluftreifens, die magnetrheologische Flüssigkeit enthalten, können gemäß Anspruch 15 dadurch hergestellt werden, indem diese in einer oder mehreren Mischungsstufen - vorzugsweise in der letzten Mischungsstufe - der Kautschukmischung für die Reifenherstellung beigegeben wird. So sind keine Änderungen in der Reifenkonfektion erforderlich und dadurch ist die Produktion besonders billig.

Zur Erhöhung der Lenkpräzision eines Fahrzeugluftreifens bei hohen Geschwindigkeiten ohne Verschlechterung des Abrollkomforts bei niedrigen Geschwindigkeiten wird zumindest in einem der Kernreiter magnetrheologische Flüssigkeit angeordnet. Im Bereich des Kernreiters sollte mit zunehmender Geschwindigkeit eine zunehmende Magnetfeldstärke aufgebaut werden, wobei die Orientierung der Feldlinien bei hoher Geschwindigkeit im wesentlichen in einer Ebene senkrecht zur Erstreckung der mit magnetrheologischer Flüssigkeit gefüllten Hohlräume des Kernreiters verlaufen sollten.

Die Haupterstreckung der mit magnetrheologischer Flüssigkeit gefüllten Hohlräume der Kernreiters sollte die Umfangsrichtung sein, also sollten die Magnetfeldlinien radial und/oder axial verlaufen. Die optimale Winkelstellung zwischen Magnetfeldlinien und Hohlraumerstreckung wird im Einzelfall vom Fachmann durch eine kleine Versuchsreihe ermittelt.

Weiterhin enthält vorzugsweise - zur Erhöhung der Lenkpräzision des Fahrzeugluftreifens bei hohen Geschwindigkeiten ohne Verschlechterung des Abrollkomforts bei niedrigen Geschwindigkeiten - zumindest eine der beiden Seitenwände magnetrheologische Flüssigkeit. Dabei sollte bei hohen Geschwindigkeiten eine stärkere Magnetfeldstärke im Bereich der Seitenwand aufgebaut werden als bei niedrigen Geschwindigkeiten, wobei die Magnetfeldlinien zumindest bei hoher Geschwindigkeit im wesentlichen in einer Ebene senkrecht zur Erstreckung der mit magnetrheologischer Flüssigkeit gefüllten Hohlräume der Seitenwand verlaufen.

Ferner soll zur Unterdrückung stehender Biegewellen des Laufflächenbereiches eines Fahrzeugluftreifens, der Seitenwände und vorzugsweise Gürtellagen aufweist, ohne Verschlechterung des Abrollkomforts bei niedrigen Geschwindigkeiten, eine der beiden Seitenwände und/oder zumindest eines der die Gürtellagen in deren Kantenbereich beabstandenden, im Querschnitt keilartigen Elastomerprofile und/oder eine Bandage und/oder der Laufstreifen magnetrheologische Flüssigkeit enthalten, wobei bei hohen Geschwindigkeiten eine stärkere Magnetfeldstärke im Bereich der Seitenwand bzw. der Elastomerprofile aufgebaut wird als bei niedrigen Geschwindigkeiten, wobei die Magnetfeldlinien zumindest bei hoher Geschwindigkeit im wesentlichen in einer Ebene senkrecht zur Erstreckung der mit magnetrheologischer Flüssigkeit gefüllten Hohlräume der Seitenwand bzw. der Elastomerprofile verlaufen. Hier soll die optimale Winkelstellung zwischen Magnetfeldlinien und Hohlraumerstreckung im Einzelfall vom Fachmann durch eine kleine Versuchsreihe ermittelt werden.

Weiterhin wird gemäß Anspruch 17 ein Magnet in der Felge bevorzugt, sodaß die Mitrotation dieses Bauteiles die ansonsten in den Reifenbauteilen entstehenden Wirbelströme vermeidet oder klein hält. Auf diese Weise bleibt der Energiebedarf und die Reifenaufheizung klein.

Bevorzugt wird zusätzlich gemäß Anspruch 23 eine Kombination aus mitrotierendem Magneten mit einem nicht mitrotierenden Magneten in Radnähe. Der nicht mitrotierende Magnet wird so nahe an einem mit magnetrheologischer Flüssigkeit enthaltenen Bauteil positioniert, zum Beispiel an einem zwischen den Gürtelkanten befindlichen Elastomerprofil und/oder an einer Bandage und/oder einer base und/oder einer cap, daß sich das bzw. die magnetrheologische Flüssigkeit enthaltende(n) Bauteil(e) versteift bzw. versteifen infolge des Passierens des Magnetfeldes. Durch den Zusatz dieses weiteren oder weiterer Magneten wird eine Erhöhung der Lenkpräzision und/oder eine Verkleinung stehender Wellen bei hohen Geschwindigkeiten erzielt. Dies ergibt eine überlagerte Funktionsweise entsprechend den auf Seite 9 unten gesagten und im Anspruch 20 beanspruchten.

Ferner wird gemäß Anspruch 22 bevorzugt, daß die nicht rotierende Magnete Elektromagnete sind und deren im Reifen wirksame Feldstärke durch die elektrische Stromstärke eingestellt wird. Dadurch wird ermöglicht, daß eine elektronische Verstellung der Steifigkeit durch die Verstellung der magnetischen Feldstärke über der Stromstärke erfolgt, was keine beweglichen Bauteile erfordert und somit zu geringen Anschaffungskosten bei hoher Zuverlässigkeit führt.

Die Erfindung wird nachfolgend anhand einiger Figuren erläutert. Es zeigt:
- Fig. 1: einen Querschnitt durch einen erfindungsgemäßen Fahrzeugluftreifen mit einem magnetrheologische Flüssigkeit enthaltenden Kernreiter,
- Fig. 2: ausschnittsweise einen Querschnitt durch einen erfindungsgemäßen Fahrzeugluftreifen mit einem Kernreiter mit einer Hohlkammer zur abgegrenzten Aufnahme magnetrheologischer Flüssigkeit,
- Fig. 3a: einen Längsschnitt durch einen Kernreiter eines erfindungsgemäßen Fahrzeugluftreifens mit einer spiralförmigen Hohlkammer zur abgegrenzten Aufnahme der magnetrheologischen Flüssigkeit,
- Fig. 3b: analog Fig. 3a einen Kernreiter mit mehreren konzentrischen Hohlkammern,
- Fig. 4: die linke Hälfte eines Querschnittes durch einen erfindungsgemäßen Fahrzeugluftreifen mit einer magnetrheologische Flüssigkeit enthaltenden Seitenwand auf der axialen Außenseite des Reifens,
- Fig. 5: einen Schulterbereich eines erfindungsgemäßen Fahrzeugluftreifens im Querschnitt mit einem magnetrheologische Flüssigkeit enthaltenden Elastomerprofil zwischen den Kanten benachbarter Gürtellagen,
- Fig. 6: in zur Fig. 5 analogen Darstellung ein Elastomerprofil zwischen den Kanten benachbarter Gürtellagen mit in Umfangsrichtung sich erstreckenden Schläuchen zur Aufnahme magnetrheologischer Flüssigkeit,
- Fig. 7: einen Querschnitt durch einen erfindungsgemäßen Fahrzeugluftreifen mit einer in der Gummierung eine magnetrheologische Flüssigkeit enthaltenden Bandage zwischen Laufstreifen und Gürtellagen,
- Fig. 8: einen Querschnitt durch einen erfindungsgemäßen Fahrzeugluftreifen mit einem magnetrheologische Flüssigkeit enthaltenden Laufstreifen,
- Fig. 9: einen Längsschnitt durch eine Extruderdüse mit Einspritzkanälen zum Einspritzen magnetrheologischer Flüssigkeit in das Extrudat,
- Fig. 10: analog Fig. 9 eine Extruderdüse mit Einspritzkanälen, jedoch mit Bildung dünnerer Einspritzkanäle zum Einspritzen magnetrheologischer Flüssigkeit in das Extrudat,
- Fig. 11: die Lagerung auf einer magnetischen Ablagefläche eines abgelängten Extrudates mit magnetrheologischer Flüssigkeit in längs verlaufenden Hohlkammern,
- Fig. 12: einen Querschnitt durch ein Rad mit einem erfindungsgemäßen Fahrzeugluftreifen und einem in dessen Luftraum angeordneten, mitrotierenden, ringförmigen Magneten,
- Fig. 13: eine Seitenansicht eines Rades mit erfindungsgemäßem Fahrzeugluftreifen mit einem nicht zum Ring geschlossenen, außerhalb des Rades in Radnähe angeordneten, nicht mitrotierenden Magneten,
- Fig. 14: ausgehend von Figur 13 die Wirkung der Trägheit (delay), mit der die Steifigkeit der magnetrheologischen Flüssigkeit dem über der Drehwinkelstellung, wechselndem magnetischen Durchfluß folgt,
- Fig.15a: einen Querschnitt durch ein Rad mit einem Fahrzeugluftreifen und einem in dessen Luftraum angeordneten, mitrotierenden ringförmigen Magneten, dessen axiale Stellung von der Fiehkraft abhängt,
- Fig.15b: die gleiche Anordnung wie Fig. 15a, jedoch nach Magnetenverstellung bei geringerer Geschwindigkeit,
- Fig. 16: einen Querschnitt durch ein Rad mit einem erfindungsgemäßen Fahrzeugluftreifen und einem in dessen Luftraum angeordneten, mitrotierenden Kranz von Magneten, die über je eine Hebelvorrichtung durch Einfederung des Fahrzeugluftreifens in Kernreiternähe gebracht werden.

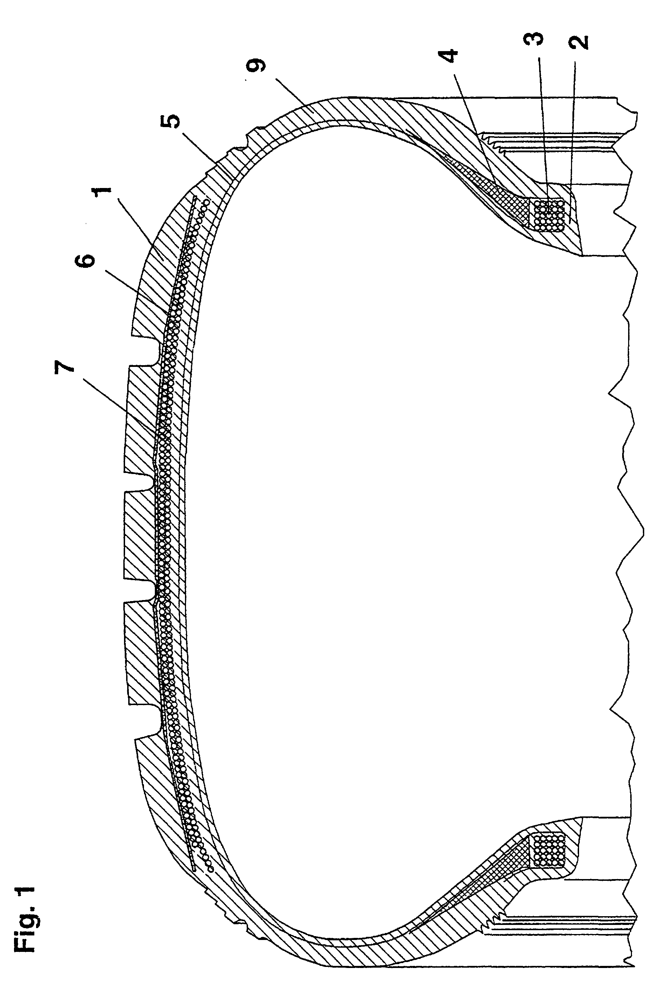

Figur 1 zeigt einen Querschnitt durch einen erfindungsgemäßen Fahrzeugluftreifen 1 mit einem magnetrheologische Flüssigkeit enthalten den Kernreiter 4 zwischen dem in Wulst 2 liegenden Wulstkern 3, der Seitenwand 9 und der Karkasse 5 des Reifens 1. Die Figur zeigt weiter auf der Karkasse 5 liegend einen zweifach angeordneten Gürtel 6 sowie eine Bandage 7. Der magnetrheologische Flüssigkeit enthaltende Kernreiter 4 kann durch Aufbringung eines Magnetfeldes versteift werden, sodaß eine Erhöhung der Lenkpräzision, bevorzugt bei hohen Geschwindigkeiten, erzielbar ist.

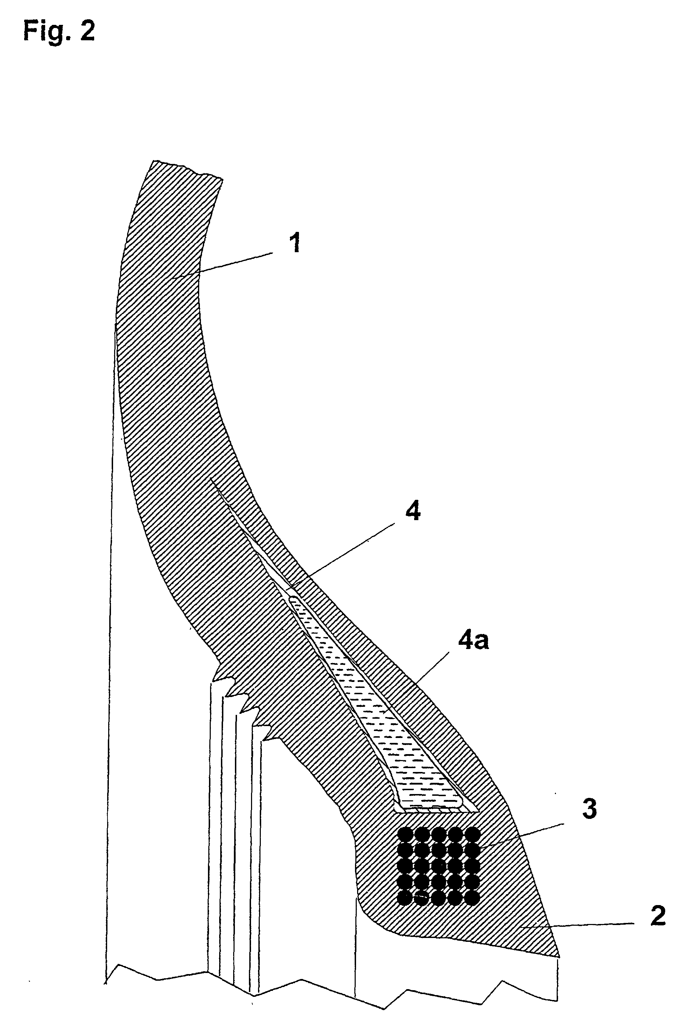

Figur 2 zeigt ausschnittsweise einen Querschnitt durch einen erfindungsgemäßen Fahrzeugluftreifen 1 mit einem Kernreiter 4, der in radialer Richtung auf dem im Wulst 2 sitzenden Wulstkern 3 angeordnet ist mit einem Hohlraum 4a zur Abgrenzung der magnetrheologischen Flüssigkeit. Diese Ausführung ermöglicht eine noch stärkere Versteifung als die in Figur 1 beschriebene Bauform aufgrund des größeren Flächenträgheitsmomentes.

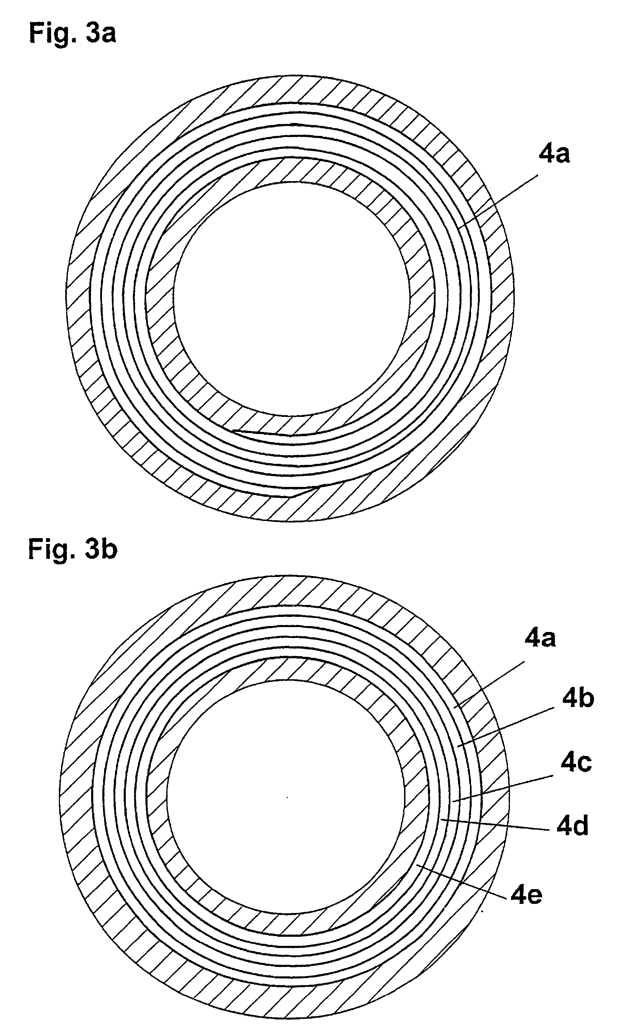

Figur 3a zeigt einen Längsschnitt durch einen Kernreiter 4 mit einer spiralförmigen Hohlkammer 4a zur Abgrenzung der magnetrheologischen Flüssigkeit. Diese Figur zeigt eine mögliche Erstreckung der Hohlkammer als endliche, in mehreren Windungen aufgebaute Kammer mit zwei Stirnseiten, wobei durch diese Konstruktion ein Ausströmen der magnetrheologischen Flüssigkeit klein gehalten wird.

Figur 3b zeigt analog zu Figur 3a einen Kernreiter 4 mit mehreren konzentrischen Hohlkammern 4a bis 4e die an den Stirnseiten endlos gefügt sind. Diese Konstruktion hat gegenüber der spiralförmigen Anordnung den Vorteil, daß ein Ausströmen der magnetrheologischen Flüssigkeit unmöglich ist.

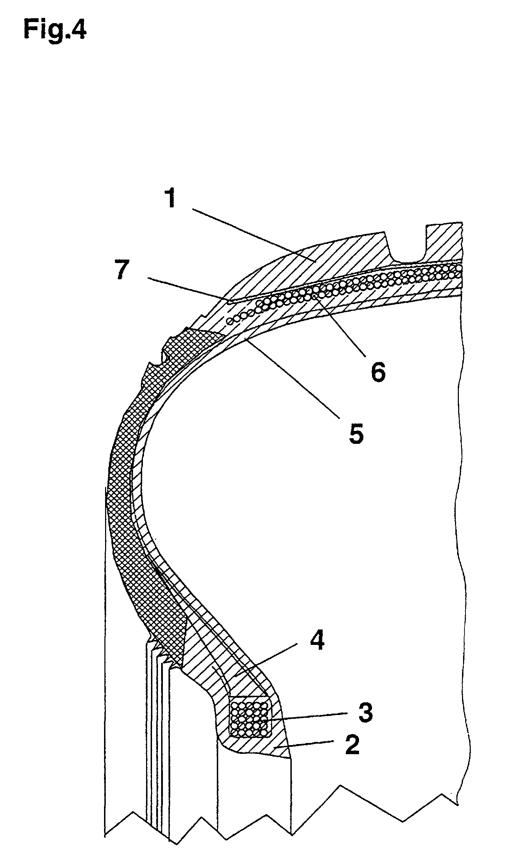

Figur 4 zeigt die linke Hälfte eines Querschnittes durch einen erfindungsgemäßen Fahrzeugluftreifen 1 mit einer magnetrheologische Flüssigkeit enthaltender Seitenwand 9 auf der axialen Außenseite des Reifens. In an sich bekannter Weise ist im Wulst 2 der Wulstkern 3 und der Kernreiter 4 sowie auf der Karkasse 5 der Gürtel 6 und die Bandage 7 angeordnet. Durch die Anordnung der magnetrheologischen Flüssigkeit in der Seitenwand 9 wird eine verbesserte Notlauffähigkeit erreicht.

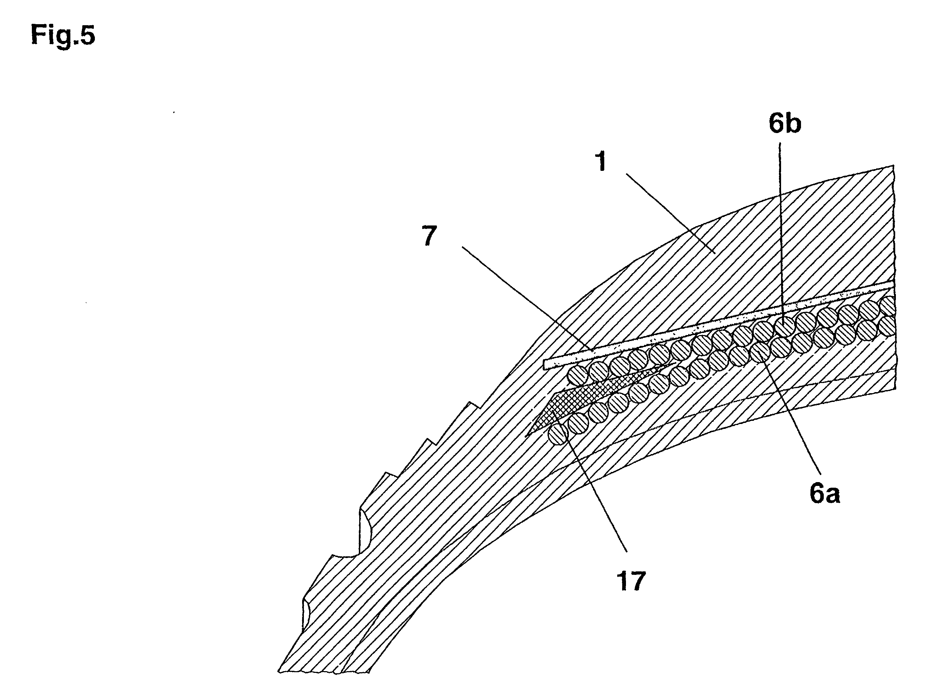

Figur 5 zeigt einen Querschnittausschnitt durch einen Fahrzeugluftreifen 1 mit einem magnetrheologische Flüssigkeit enthaltenden, keilartigen Elastomerprofil 17 zwischen den Kanten benachbarter Gürtellagen 6a, 6b. Über den Gürtellagen 6a, 6b liegt eine Bandage 7. Diese Anordnung bewirkt mittels der magnetrheologischen Flüssigkeit eine höhere Steifigkeit im Schulterbereich des Reifens beim Passieren eines Magnetfeldes erreicht, sodaß die geringere Walkbarkeit dieses Bereiches zu einer Reduzierung der Wärmeentwicklung führt.

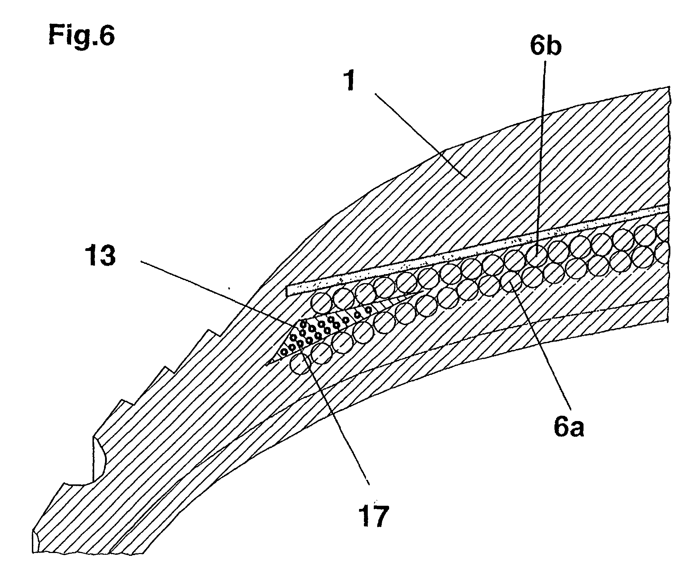

Figur 6 zeigt ausschnittsweise einen Querschnitt durch einen erfindungsgemäßen Fahrzeugluftreifen 1 mit einem keilartigen Elastomerprofil 17 zwischen den Kanten benachbarter Gürtellagen 6a, 6b und in Umfangsrichtung sich erstreckenden Schläuchen 13 zur Abgrenzung von Hohlkammern 17a zur Aufnahme magnetrheologischer Flüssigkeit. Diese räumliche Konzentration der magnetrheologischen Flüssigkeit vergrößert die in der Beschreibung der Figur 5 genannten Vorteile.

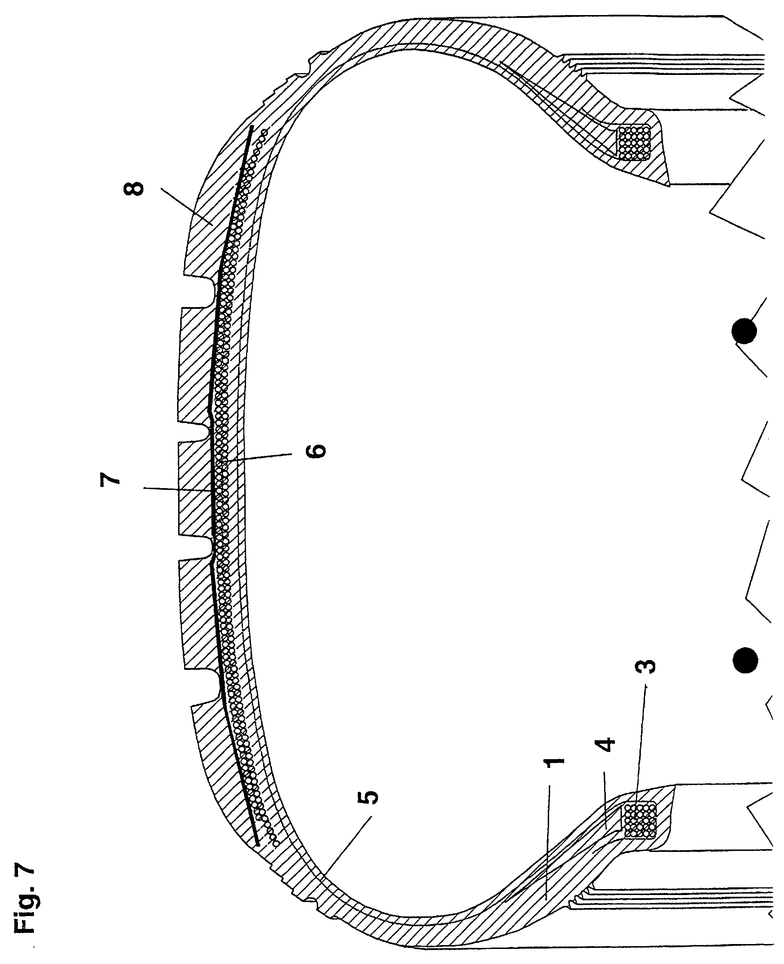

Figur 7 zeigt analog zu Figur 1 einen Querschnitt durch einen erfindungsgemäßen Fahrzeugluftreifen 1, jedoch mit einer magnetrheologische Flüssigkeit enthaltenden Bandage 7 zwischen Laufstreifen 8 und Gürtel 6. Durch Magnetfeldaufbringung läßt sich, insbesondere bei höheren Geschwindigkeiten, eine höhere Steifigkeit erzielen.

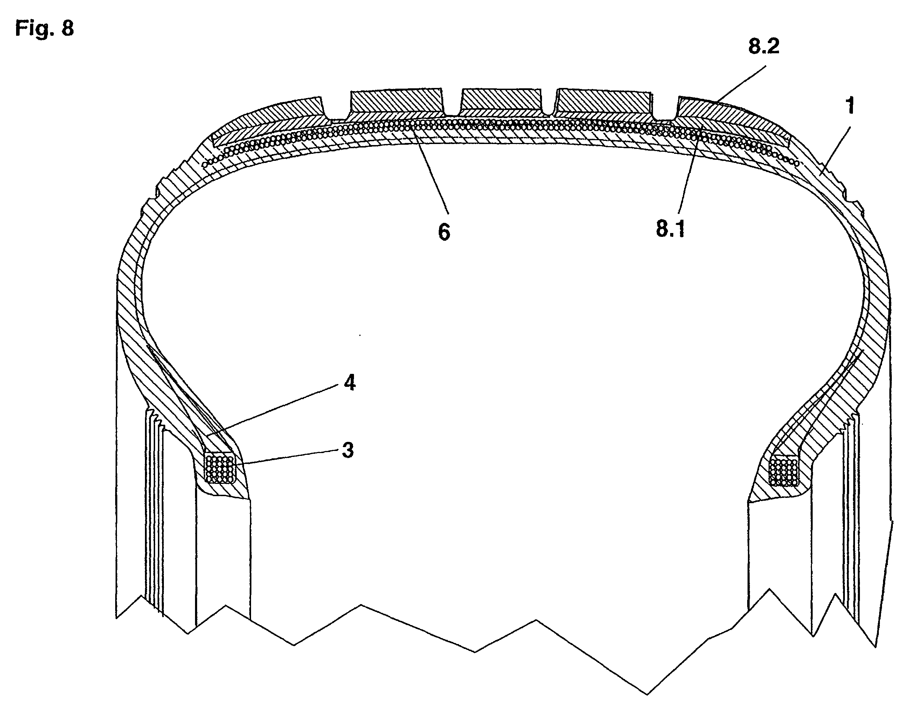

Figur 8 zeigt analog zu Figur 1 einen Querschnitt durch einen erfindungsgemäßen Fahrzeugluftreifen 1, jedoch mit einem auf der radial Außenseite des Reifens liegenden magnetrheologische Flüssigkeit enthaltenden Laufstreifen. Vorzugsweise ist die magnetrheologische Flüssigkeit in cap 8.2 und base 8.1 angeordnet. Durch diese Ausführung wird bei entsprechendem Magnetfeldaufbau die Einfederung der Reifeninnenseite auf der Felge oder aufeinander bei einem Luftdruckabfall vermieden.

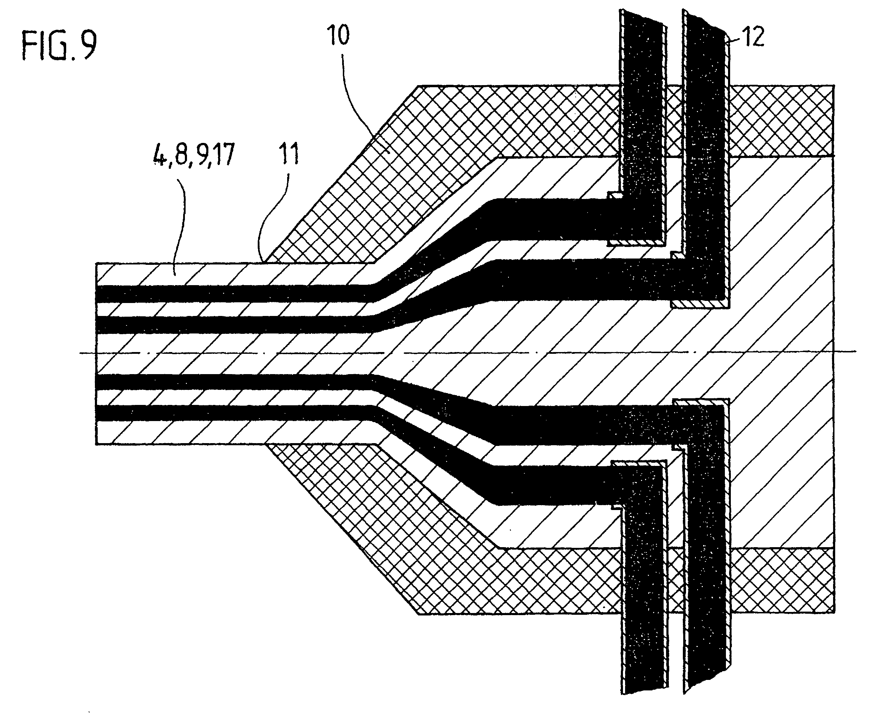

Figur 9 zeigt einen Längsschnitt durch eine Extruderdüse 10 mit in Strömungsrichtung angeordneten Einspritzkanälen 12 zum Einspritzen magnetrheologischer Flüssigkeit in das Extrudat. Das Extrudat kann ein Kernreiter 4 sein oder ein Laufstreifen 8 oder eine Seitenwand 9 oder ein die Gürtelkanten spreizendes Elastomerprofil 17. Dieses Verfahren zur Einbringung der magnetrheologischen Flüssigkeit in das Extrudat erfordert keinen Mehraufwand bei der Reifenkonfektion und vermeidet Luftblasenbildung im Extrudat.

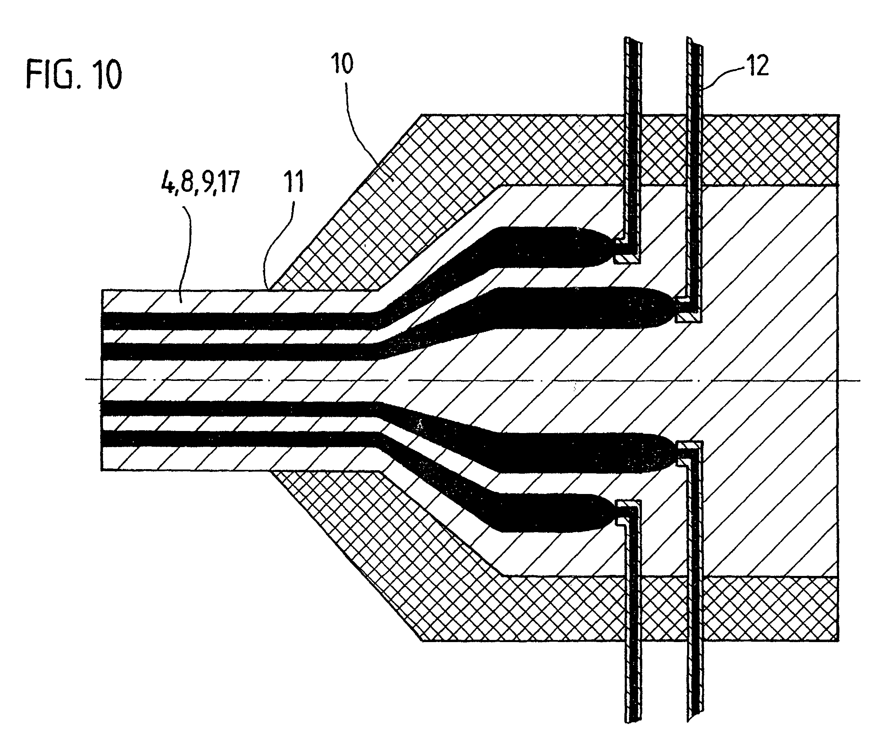

Figur 10 zeigt analog zur Figur 9 einen Längsschnitt durch eine Extruderdüse 10 mit in Strömungsrichtung angeordneten Einspritzkanälen 12 zum Einspritzen magnetrheologischer Flüssigkeit in das Extrudat, welches auch hier ein Kernreiter 4 oder ein Laufstreifen 8 oder eine Seitenwand 9 oder ein die Gürtelkanten beabstandendes Elastomerprofil 17 sein kann.

Abweichend von Figur 9 sind hier die Einspritzkanäle 12 dünner ausgebildet. Ihre so verringerte Querschnittsfläche verringert den Strömungswiderstand der Einspritzdüsen im Kautschukstrom. Um dennoch den gleichen Massendurchsatz magnetrheologischer Flüssigkeit in den Einspritzkanälen zu erreichen, ist die Strömungsgeschwindigkeit der magnetrheologischen Flüssigkeit im Einspritzkanal gegenüber der Kautschukströmungsgeschindigkeit um den Faktor erhöht, wie die Einspritzkanalquerschnittsfläche verringert ist.

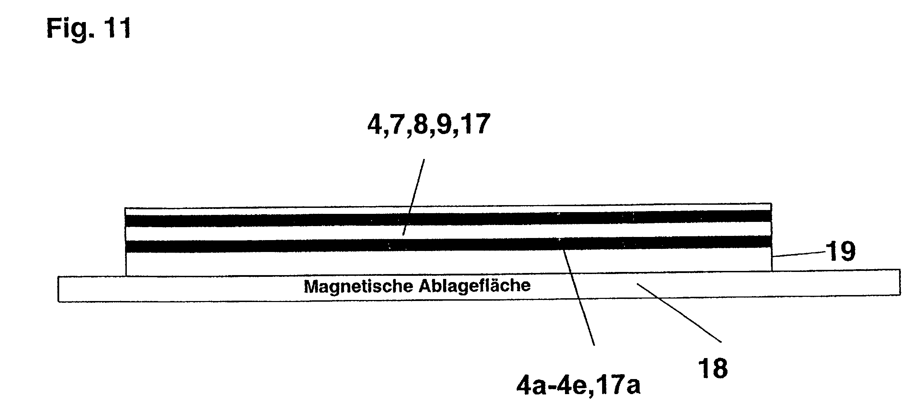

Figur 11 zeigt die Lagerung eines abgelängten Extrudates, das ein Kernreiterprofil 4, oder ein Bandage 7, oder ein Laufstreifen 8, oder eine Seitenwand 9, oder ein Elastomerprofil 17 mit in Längsrichtung verlaufenden mit magnetrheologische Flüssigkeit gefüllten Hohlkammern 4a, 4b bzw. 17a auf eine magnetischen Ablagefläche 18. Durch diese Lagerung der magnetrheologische Flüssigkeit enthaltenden Reifenbauteile vor der Konfektion des Reifens läuft an den geschnittenen Stirnseiten 19 die magnetrheologische Flüssigkeit der Extrudate 4, 7, 8, 9, 17 wegen der Versteifung nicht aus.

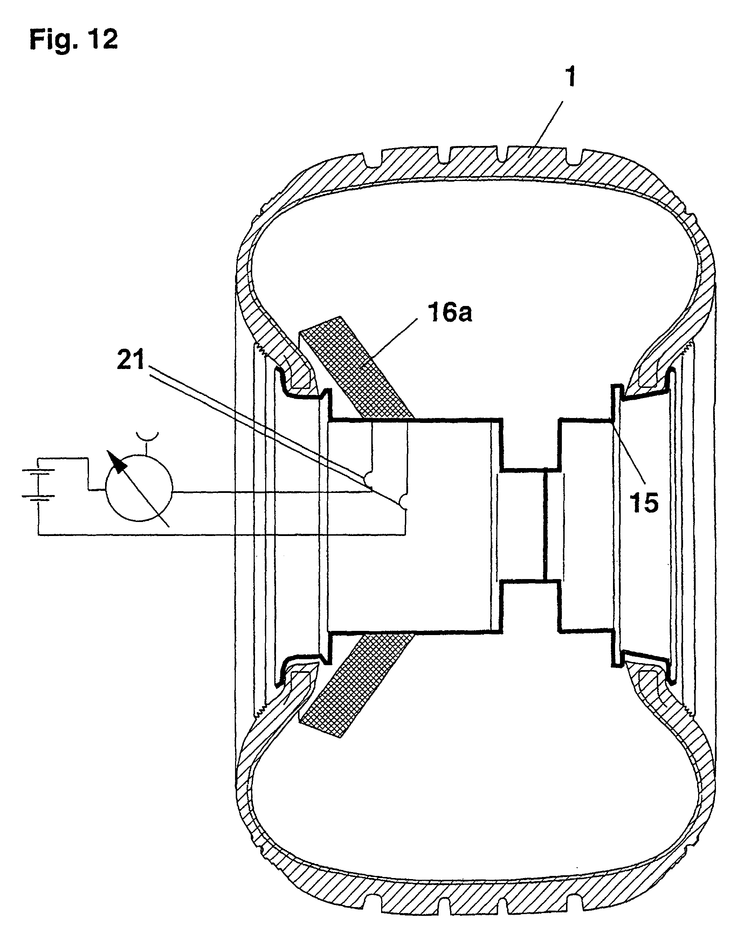

Figur 12 zeigt einen Querschnitt durch ein Rad mit einer Felge 15, mit einem erfindungsgemäßen Fahrzeugluftreifen 1 und einem in dessen Luftraum angeordneten, mitrotierenden, ringförmigen Magneten 16a. Durch diese Ringförmigkeit bleibt die Reifenaufheizung aufgrund von Wirbelströmen klein. Bei der hier gezeigten Ausführung als Elektromagnet erfolgt die Einspeisung eines einstellbaren Stromes über Strombürsten 21.

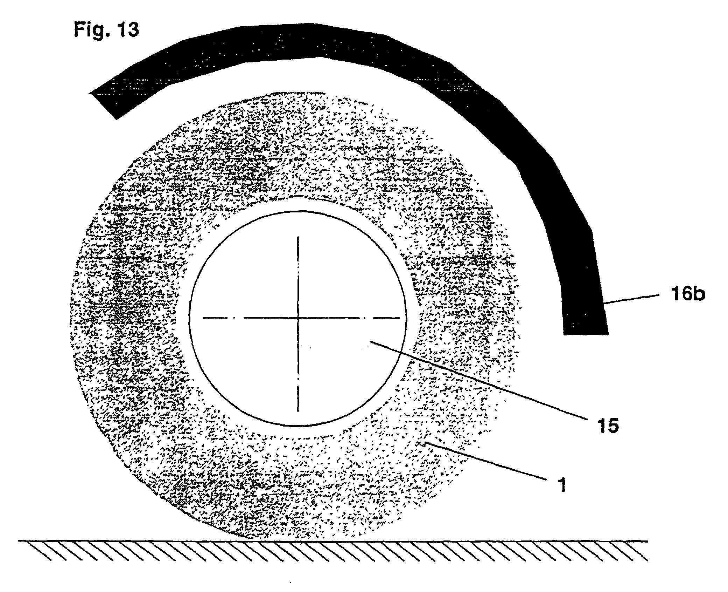

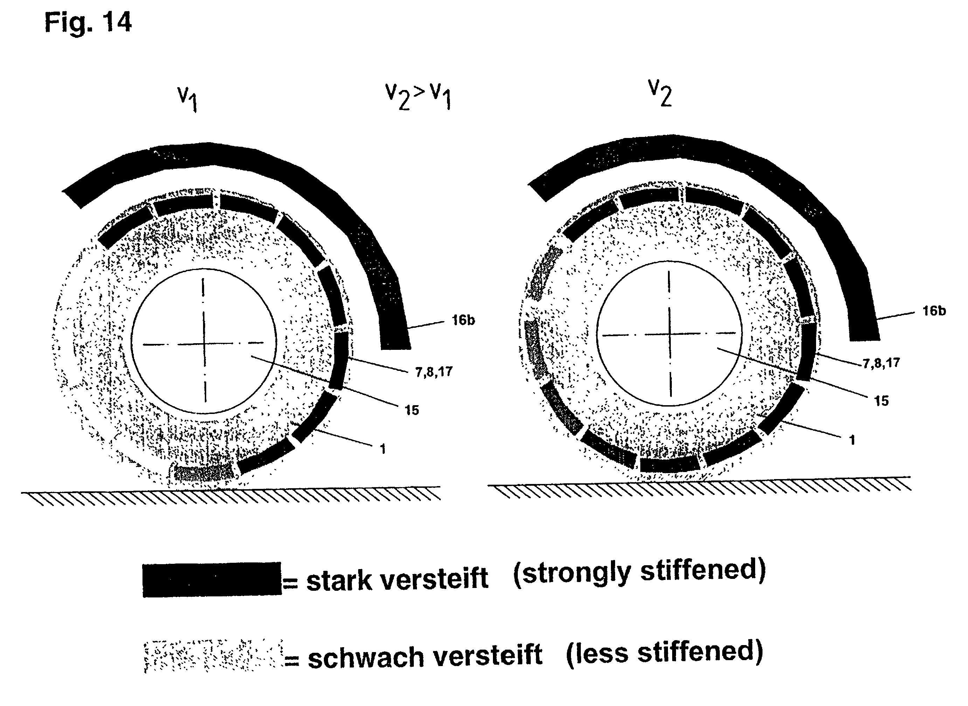

Figur 13 zeigt eine Seitenansicht eines Rades mit erfindungsgemäßem Fahrzeugluftreifen 1 auf einer Felge 15 mit einem zum Ring geschlossenen, außerhalb des Rades in Radnähe angebrachten, nicht mitrotierenden Magneten 16b. Die geschwindigkeitsabhängige Wirkung dieser Anordnung zeigt Figur 14:

Figur 14 zeigt die Trägheit (delay), mit der die Steifigkeit der magnetrheologischen Flüssigkeit in einem Reifenbauteil, wie in einem Kernreiter 4 oder einer Bandage 7 oder einem Laufstreifen 8 oder einer Seitenwand 9 oder einem Keilprofil 17, dem über der Zeit - also der Drehwinkelstellung - wechselndem magnetischen Durchfluß durch das Reifenbauteil folgt, den der Magnet 16b verursacht. Diese Figur zeigt, daß die Versteifung des Reifenbauteiles im Latsch - beginnend mit seinem Einlaufbereich - um so höher ist, je höher die Winkelgeschwindigkeit des Fahrzeugluftreifens ist. Bei höherer Winkelgeschwindigkeit wird nämlich ein größerer Drehwinkel pro Zeiteinheit durchlaufen. Bei höheren Geschwindigkeiten versteift sich der Reifen im Latsch stärker als bei niedrigeren Geschwindigkeiten und erzielt somit bessere Lenkpräzision bei höheren Geschwindigkeiten ohne Einbußen im Abrollkomfort bei niedrigeren Geschwindigkeiten.

Die Figuren 15a und 15b zeigen analog Figur 12 einen Querschnitt durch einen erfindungsgemäßen Fahrzeugluftreifen 1 mit einem in dessen Luftraum angeordneten, mitrotierenden Magneten 16a. Dessen axiale Stellung ist fliehkraftabhängig: Bei höherer Geschwindigkeit findet er eine Position weit axial außen, nahe dem Kernreiter 4 und führt dort infolge hoher Magnetflußkonzentration zu einer erheblichen Versteifung des oder der mit magnetrheologischer Flüssigkeit gefüllten Bauteiles; bei abnehmender Geschwindigkeit verstellt sich der Magnet 16a nach axial innen.

Der Mechanismus für die axiale Verschiebung des Magneten 16a besteht aus einer Ringmagnetenlagerung 24, mehreren auf den gesamten Felgenumfang angeordneten Aktuatoren 23 und einer Wurmfeder 22 (z. B. aus Gummi) für die Rückstellkraft des Magneten 16a. Der Mechanismus ist in Figur 15a bei hoher Geschwindigkeit dargestellt. Die Verstellung für niedrige Geschwindigkeiten funktioniert wie folgt:

Bei abnehmender Geschwindigkeit sinkt die Fliekraft der Aktuatoren und der Wurmfeder. Deshalb stellt sich eine neue Gleichgewichtslage, wie in Figur 15b gezeigt, ein mit einer weniger gespannten Feder 22. Die Wurmfeder 22 nimmt also eine geringere Umfangslänge ein. Dabei verschwenken sich die Aktuatoren 23 im Uhrzeigersinn und nehmen den Ringmagneten 16a nach axial innen mit vermittels eines am Magneten 16a befestigten Bolzen 16.1a, der in ein Langloch oder eine Nut 23.1 des Aktuators 23 eingreift. Durch die Verstellbarkeit dieser Vorrichtung wird die Magnetfeldstärke im zu versteifenden Bereich den wechselnden Steifigkeitsanforderungen angepaßt.

Figur 16 zeigt einen Querschnitt durch ein Rad 15 mit einem erfindungsgemäßen Fahrzeugluftreifen 1 und einem in dessen Luftraum angeordneten, mitrotierenden Kranz von Magneten 16a. Jeder Magnet 16a wird über eine Hebelvorrichtung 20 bei einer übergroßen Einfederung des Fahrzeugluftreifens 1 in die Nähe des Kernreiters gebracht. Die Hebelvorrichtung 20 weist ein Gehäuse 20.1 auf, in dem ein pilzähnlich gestalteter mechanischer Sensor 20.2 radialverschieblich gelagert ist. Dieser mechanische Sensor 20.2 greift mit einem Bolzen 20.3 in ein Langloch 20.4 eines gekröpften Hebels 20.5 ein. Der Hebel 20.5 ist auf einer Achse 20.6 gegenüber einem Ausleger 20.7 des Gehäuses 20.1 gelenkig gelagert. An jedem Hebel 20.5 ist am sensorabgewandten Ende 20.52 ein Magnet 16a befestigt. In Volllinie ist die Normalstellung gezeigt.

In gestrichelter Linie ist die Notstellung gezeigt; der Übergang funktioniert wie folgt:

Ein Luftdruckabfall führt zu einer übergroßen Reifeneinfederung. Infolgedessen setzt die Innenseele des Reifens 1 beim Durchlauf durch den Latsch auf dem tellerartigen radial äußeren Ende des mechanischen Sensors 20.2 auf und drückt diesen nach radial innen. Dabei wird der sensorzugewandte Teil des Hebels 20.5 nach unten mitgenommen. Das sensorzugewandte Ende 20.51 rastet dabei in eine Nut 20.81 einer Blattfeder 20.8 ein. Dieses Einrasten verhindert, daß der Hebel 20.5 beim Verlassen des Latsches wieder seine Normalstellung einnimmt und stellt sicher, daß das sensorabgewandte Ende 20.52 des Hebels 20.5 nach oben verschwenkt bleibt, sodaß das magnetrheologische Flüssigkeit enthaltende Bauteil - hier ist als solches der nicht eingezeichnete Apex (=Kernreiter) angenommen - schon vor dem (erneuten) Latscheinlauf versteift ist.

Diese Vorrichtung hat den Vorteil, daß - z. B. bei einem Luftdruckabfall - der magnetrheologische Flüssigkeit enthaltende Kernreiter und/oder die Seitenwand durch Aufbringung eines stärkeren Magnetfeldes versteift wird, sodaß eine besserer Notlauf erzielt wird. Beim Reifenwechsel nach einer solchen Panne wird der Mechanismus durch Lösen aus der Rastnut 20.81 in seiner Normalstellung zurückgeführt. Zur Elimenierung von Schwerkrafteinflüssen und Virbrationen kann außerdem um den Hals 20.21 des mechanischen Sensors 20.2 eine (hier der Übersicht halber nicht dargestellte) Helixdruckfeder angeordnet sein zwischen Unterseite des Tellers des Sensors 20.2 und oberer Stirnseite des Gehäuses 20.1, die den Sensor 20.2 immer leicht nach radial außen drückt.

Eine Bezugszeichenliste ist Bestandteil der Beschreibung.

### Bezugszeichenliste

- 1: Fahrzeugluftreifen
- 2: Wülste von 1 (bead, talon)
- 3: Wulstkerne (bead core, tringle)
- 4: Kernreiter (apex, bourrage sur tringle) 4a, 4b, 4c, 4d, 4e Hohlkammerschnitte im Kernreiter
- 5: Karkasse
- 6: Gürtel 6a, 6b Gürtellagen
- 7: Bandage
- 8: Laufstreifen (8)
8.1 base
8.2 cap
- 9: Seitenwand
- 10: Extrusionsdüse
- 11: Austrittsöffnung von 10
- 12: Einspritzkanäle in Düse 10
- 13: Schlauch zur Hohlkammerabgrenzung und Aufnahme magnetrheologischer Flüssigkeit
- 14: Streifen aus geschäumtem Elastomer zur Aufnahme magnetrheologischer Flüssigkeit
- 15: Felge
- 16: Magneten
16a rotierende Magneten, 16.1a Bolzen zur Mitnahme von 16a
16b nicht-rotierende Magneten
- 17: im Querschnitt keilartiges Elastomerprofil zwischen Kanten benachbarter Gürtellagen 6a, 6b zu deren radialen Beabstandung
17a Hohlkammerquerschnitte in 17
- 18: magnetische Ablagefläche für magnetrheologische Flüssigkeit enthaltene Extrudate
- 19: geschnittene Stirnseiten der Extrudate 4, 7, 8, 9, 17
- 20: Hebelvorrichtung
20.1 Gehäuse von 20
20.2 mechanischer Sensor von 20 mit "Teller" am radial äußeren Ende und 20.21 Hals
20.3 Bolzen am mechanischen Sensor 20.2 zum Eingriff in 20.4
20.4 Langloch in 20.5 am sensorzugewandten Ende
20.5 gekröpfter Hebel
20.51 sensorzugewandtes Ende von 20.5
20.52 sensorabgewandtes Ende von 20.5
20.6 Achse zur Lagerung von 20.5 gegenüber 20.7
20.7 Ausleger von 20.1
20.8 Blattfeder 20.81 Rastnut in 20.8
- 21: Strombürsten
- 22: Wurmfeder
- 23: Aktuator
23.1 Langloch oder Nut in 23 zur Aufnahme von 16.1a
- 24: Ringmagnetlagerung

## Patentansprüche

1. Fahrzeugluftreifen (1), der im wesentlichen aus Festigkeitsträgern (3, 5, 6) und verschiedenen Gummibauteilen wie zum Beispiel Kernreiter (4), Laufstreifen (8) und Seitenwand (9) aufgebaut ist,
**dadurch gekennzeichnet, daß**
zumindest eines seiner Gummibauteile eine magnetrheologische Flüssigkeit enthält.

2. Fahrzeugluftreifen (1) nach Anspruch 1, mit den Wülsten (2) angeordneten Wulstkernen (3), darauf befindlichen Kernreitern (4) und einer um die Wulstkerne (3) geschlungenen Karkasse (5), die im axialen Bereich des Laufstreifens (8) durch Gürtellagen (6) verstärkt sein kann, **dadurch gekennzeichnet, daß** zumindest einer der beiden Kernreiter (4) mit mindestens einer sich im wesentlichen in Umfangsrichtung erstreckenden Hohlkammer (4a) ausgestattet ist und diese Hohlkammer (4a) mit einer magnetrheologischen Flüssigkeit gefüllt ist.

3. Fahrzeugluftreifen (1) nach Anspruch 2, **dadurch gekennzeichnet, daß** die eine Hohlkammer, die mit einer magnetrheologischen Flüssigkeit gefüllt ist, in mehreren Windungen vorliegt, sodaß sie in einem Querschnitt als eine Vielzahl von Gangquerschnitten (4a, 4b, 4c) erscheint, wobei die Windungen sich im wesentlichen in Umfangsrichtung erstrecken.

4. Fahrzeugluftreifen (1) nach Anspruch 2, **dadurch gekennzeichnet, daß** zumindest einer der beiden Kernreiter (4) eine Vielzahl von Hohlkammern (4a, 4b, 4c) aufweist, die sich im wesentlichen in Umfangsrichtung erstrecken und mit einer magnetrheologischen Flüssigkeit gefüllt sind.

5. Fahrzeugluftreifen (1) nach Anspruch 1 mit zwei Seitenwänden (9), **dadurch gekennzeichnet, daß** zumindest eine Seitenwand (9), vorzugsweise in einer Schicht auf der Innenseite einer Karkasse (5), aus einer Gummimischung besteht, die eine magnetrheologische Flüssigkeit enthält.

6. Fahrzeugluftreifen (1) nach Anspruch 1, mit einer Karkasse (5) und mit unterhalb des Laufstreifens (8) angeordneten mindestens zwei Gürtellagen (6), von denen vorzugsweise mindestens eine nicht-metallische Festigkeitsträger enthält, wobei die Gürtelkanten durch ein entsprechendes Elastomerprofil (17) auf einem größeren radialen Abstand voneinander gehalten sind als der Mittenbereich der Gürtellagen, **dadurch gekennzeichnet, daß** zumindest eines der die Gürtellagen (6) im Kantenbereich beabstandenden Elastomerprofile (17) - vorzugsweise alle Elastomerprofile (17) - eine Gummimischung enthalten, die eine magnetrheologische Flüssigkeit enthält.

7. Fahrzeugluftreifen (1) nach Anspruch 6, **dadurch gekennzeichnet, daß** zumindest eines der Elastomerprofile (17) - vorzugsweise alle Elastomerprofile (17) - eine Vielzahl von Hohlkammern (17a, 17b, 17c) aufweisen, die sich im wesentlichen parallel zur Umfangsrichtung erstrecken und mit einer magnetrheologischen Flüssigkeit gefüllt sind.

8. Fahrzeugluftreifen (1) nach Anspruch 1, mit einer Karkasse (5), im Bereich des Laufstreifens (8) angeordneten Gürtellagen (6) und einer radial außerhalb von Karkasse (5) und Gürtellagen (6) angeordneten Bandage (7), **dadurch gekennzeichnet, daß** die Bandage (7) eine Gummimischung enthält, die eine magnetrheologische Flüssigkeit enthält.

9. Fahrzeugluftreifen (1) nach Anspruch 1, mit einem im wesentlichen aus Gummi bestehenden Streifen (8.1) - nachfolgend "base" (8.1) genannt - unterhalb der im Latsch den Boden berührenden Kappe (8.2) - nachfolgend "cap" (8.2) genannt - des Laufstreifens (8), **dadurch gekennzeichnet, daß** die Base (8.1) eine Gummimischung enthält, die eine magnetrheologische Flüssigkeit enthält.

10. Fahrzeugluftreifen (1) nach Anspruch 1, mit einem im wesentlichen aus Gummi bestehenden, im Latsch den Boden berührenden einschichtigen Laufstreifen (8) oder mit einer Laufstreifen-cap (8.2), **dadurch gekennzeichnet, daß** der Laufstreifen (8) bzw. die cap (8.2) eine Gummimischung enthält, die eine magnetrheologische Flüssigkeit enthält.

11. Verfahren zur Herstellung eines Fahrzeugluftreifens (1) gemäß Anspruch 1, der zumindest ein eine magnetrheologische Flüssigkeit enthaltendes Reifenbauteil (4, 7, 8, 9, 17) aufweist, wobei für die Herstellung des eine magnetrheologische Flüssigkeit enthaltenden Reifenbauteiles (4, 7, 8, 9, 17) zunächst in einer oder mehreren Mischungsstufen eine Kautschukmischung erstellt wird, die schließlich durch eine formgebende Extrusionsdüse (10) extrudiert wird, **dadurch gekennzeichnet, daß** in Strömungsrichtung gesehen vor der Düsenaustrittsöffnung (11), kleine Einspritzkanäle (12) in den Kautschukstrom hereinragen und durch diese eine magnetrheologische Flüssigkeit in das Extrudat eingespritzt wird, sodaß das Extrudat in Extrusionsrichtung verlaufende luftblasenfrei mit magnetrheologischer Flüssigkeit ausgefüllte Hohlkammern aufweist, und dass dann das eine magnetrheologische Flüssigkeit enthaltende Reifenbauteil (4, 7, 8, 9, 17) beim Bau des Fahrzeugluftreifens (1) verwendet wird.

12. Verfahren nach Anspruch 11, **dadurch gekennzeichnet, daß** die Strömungsgeschwindigkeit in den Einspritzkanälen (12) größer ist als die mittlere Kautschukströmungsgeschwindigkeit, sodaß die mit magnetrheologischer Flüssigkeit gefüllten Hohlkammern (4a bis 4e) hinter dem Einspritzkanal eine größere Querschnittfläche aufweisen als die Einspritzkanäle (12).

13. Verfahren zur Herstellung eines Fahrzeugluftreifens (1) gemäß Anspruch 1, der zumindest ein eine magnetrheologische Flüssigkeit enthaltendes Reifenbauteil (4, 7, 8, 9, 17) aufweist, **dadurch gekennzeichnet, daß** zunächst für die Herstellung des eine magnetrheologische Flüssigkeit enthaltenden Reifenbauteils (4, 7, 8, 9, 17) in das Reifenbauteil (4, 7, 8, 9, 17) ein oder mehrere Schläuche (13) eingelegt werden, die vorzugsweise bereits vor dem Einlegen mit magnetrheologischer Flüssigkeit gefüllt wurden, und daß dann das eine magnetrheologische Flüssigkeit enthaltende Reifenbauteil (4, 7, 8, 9, 17) beim Bau des Fahrzeugluftreifens (1) verwendet wird.

14. Verfahren zur Herstellung eines Fahrzeugluftreifens (1) gemäß Anspruch 1, der zumindest ein eine magnetrheologische Flüssigkeit enthaltendes Reifenbauteil (4, 7, 8, 9, 17) aufweist, **dadurch gekennzeichnet, daß** zunächst für die Herstellung des eine magnetrheologische Flüssigkeit enthaltenden Reifenbauteils (4, 7, 8, 9, 17) in das Reifenbauteil (4, 7, 8, 9, 17) ein oder mehrere Streifen (14) aus geschäumtem Elastomer eingelegt werden, die vorzugsweise bereits vor dem Einlegen mit magnetrheologischer Flüssigkeit getränkt wurden, und daß dann das eine magnetrheologische Flüssigkeit enthaltende Reifenbauteil (4, 7, 8, 9, 17) beim Bau des Fahrzeugluftreifens (1) verwendet wird.

15. Verfahren zur Herstellung eines Fahrzeugluftreifens (1) gemäß Anspruch 1, der zumindest ein eine magnetrheologische Flüssigkeit enthaltendes Reifenbauteil (4, 7, 8, 9, 17) aufweist, wobei zunächst für die Herstellung des eine magnetrheologische Flüssigkeit enthaltenden Reifenbauteiles (4, 7, 8, 9, 17) in einer odere mehreren Mischungsstufen eine Kautschukmischung erstellt wird, **dadurch gekennzeichnet, daß** - vorzugsweise in der letzten Mischungsstufe - der Kautschukmischung eine magnetrheologische Flüssigkeit beigegeben wird und daß dann das eine magnetrheologische Flüssigkeit enthaltende Reifenbauteil (4, 7, 8, 9, 17) beim Bau des Fahrzeugluftreifens (1) verwendet wird.

16. Verfahren nach zumindest einem der Ansprüche 11 bis 15, **dadurch gekennzeichnet, daß** zur Verhinderung des Auslaufens magnetrheologischer Flüssigkeit aus bereits mit dieser gefüllten Reifenbauteilen (4, 7, 8, 9, 17) an geschnittenen Stirnseiten oder Porösitäten spätestens zum Zeitpunkt des Entstehens der Auslaufgefahr ein solches Magnetfeld aufgebaut wird, das die magnetrheologische Flüssigkeit so weit versteift, daß der Schwerkraftantrieb zum Fließen nicht ausreicht.

17. System, enthaltend einen Fahrzeugluftreifen (1) gemäß Anspruch 1, der zumindest ein eine magnetrheologische Flüssigkeit enthaltendes Reifenbauteil (4, 7, 8, 9, 17) aufweist, auf einer Felge (15) und zumindest einen Magneten, **dadurch gekennzeichnet, daß** zur Vermeidung oder Kleinhaltung von Wirbelströmen in den Reifenbauteilen (4, 7, 8, 9, 17) zumindest ein - vorzugsweise ringförmiger - Magnet (16a) mit der Felge (15) mitrotiert.

18. System nach Anspruch 17, **dadurch gekennzeichnet, daß** die mitrotierenden Magneten (16a) Permanentmagneten sind und - vorzugsweise fliehkraftgesteuert - bei hoher Geschwindigkeit eine Stellung näher den zu versteifenden Reifenbauteilen, vorzugsweise den beiden Kernreitern (4), annehmen als bei niedrigen Geschwindigkeiten.

19. System, enthaltend einen Fahrzeugluftreifen (1) gemäß Anspruch 1, der zumindest ein eine magnetrheologische Flüssigkeit enthaltendes Reifenbauteil (4, 7, 8, 9, 17) aufweist, auf einer Felge (15) und zumindest einen Magneten, **dadurch gekennzeichnet, daß** ein Magnetfeld durch mindestens einen Magnet (16b) in Radnähe aufgebaut wird, welcher nicht mitrotiert und sich so nahe an zumindest einem eine magnetrheologische Flüssigkeit enthaltenden Reifenbauteil (4, 7, 8, 9, 17) befindet, zum Beispiel an einem zwischen den Gürtelkanten befindlichen Elastomerprofil und/oder an einer Bandage (7) und/oder einer base und/oder einer cap, dass sich das bzw. die magnetrheologische Flüssigkeit enthaltende(n) Reifenbauteil(e) (4, 7, 8, 9, 17) versteift bzw. versteifen infolge des Passierens des Magnetfeldes.

20. System nach Anspruch 19, **dadurch gekennzeichnet, daß** der oder die Magneten (16b) in solcher Phasenlage vor dem Latscheinlauf positioniert ist bzw. sind, daß sich bei langsamer Fahrt das bzw. die durch Magnetwirkung versteifte(n) Reifenbauteil(e) (4, 7, 8, 9, 17) zwischen dem Passieren des Magnetes (16b) bzw. der Magneten (16b) und dem Latscheinlauf im wesentlichen wieder erweichen, bei zunehmender Geschwindigkeit hingegen - die Trägheit im Abklingen des Versteifungseffektes ausnutzend - die Bauteile in noch versteiftem Zustande am Latscheinlauf eintreffen - wobei die Phasen lage der Magneten (16b) vorzugsweise so gewählt ist, daß diese Grenzgeschwindigkeit bei LKW-Reifen zwischen 100 und 130 km/h, bei LKW-Reifen zwischen 70 und 80 km/h liegt - und bei noch weiter zunehmernder Geschwindigkeit ein vom Latscheinlauf her in Richtung Latschauslauf wachsender Bereich noch versteift vorliegt.

21. System nach Anspruch 19 oder 20, **dadurch gekennzeichnet, daß** die Phasenlage und/oder die Stärke der nicht-rotierenden Magneten (16b) während der Fahrt einstellbar ist.

22. Verfahren nach einem der Ansprüche 19 bis 21, **dadurch gekennzeichnet, daß** nicht-rotierende Magnete (16b) Elektromagnete sind und deren im Reifen wirksame Feldstärke durch die elektrische Stromstärke eingestellt wird.

23. System nach einem der Ansprüche 19 bis 22, **dadurch gekennzeichnet, daß** das System zusätzlich zum nicht mitrotierenden Magneten (16b) einen mit der Felge mitrotierenden Magneten (16a) aufweist.

## Claims

1. Vehicle pneumatic tyre (1) which is constructed substantially from strengtheners (3, 5, 6) and from various rubber components, such as for example bead apex strip (4), tread strip (8) and lateral wall (9),
**characterised in that**
at least one of its rubber components contains a magnetorheological liquid.

2. Vehicle pneumatic tyre (1) according to claim 1, having bead cores (3) disposed in the beads (2), bead apex strips (4) situated thereon and a carcass (5) which is looped around the bead cores (3), said carcass being able to be strengthened in the axial region of the tread strip (8) by belt plies (6), **characterised in that** at least one of the two bead apex strips (4) is provided with at least one hollow chamber (4a) which extends substantially in the circumferential direction and this hollow chamber (4a) is filled with a magnetorheological liquid.

3. Vehicle pneumatic tyre (1) according to claim 2, **characterised in that** a hollow chamber, which is filled with a magnetorheological liquid, occurs in a plurality of windings so that it appears in cross-section as a multiplicity of passage cross-sections (4a, 4b, 4c), the windings extending substantially in the circumferential direction.

4. Vehicle pneumatic tyre (1) according to claim 2, **characterised in that** at least one of the two bead apex strips (4) has a multiplicity of hollow chambers (4a, 4b, 4c) which extend substantially in the circumferential direction and are filled with a magnetorheological liquid.

5. Vehicle pneumatic tyre (1) according to claim 1, having two lateral walls (9), **characterised in that** at least one lateral wall (9), preferably in a layer on the inside of a carcass (5), is formed from a rubber mixture which contains a magnetorheological liquid.

6. Vehicle pneumatic tyre (1) according to claim 1, having a carcass (5) and having at least two belt plies (6) disposed below the tread strip (8), of which belt plies preferably at least one contains non-metallic strengtheners, the belt edges being retained by a corresponding elastomer profile (17) at a greater radial spacing from each other than the central region of the belt plies, **characterised in that** at least one of the elastomer profiles (17) - preferably all the elastomer profiles (17) - which are at a spacing from the belt plies (6) in the edge region, contain a rubber mixture which contains a magnetorheological liquid.

7. Vehicle pneumatic tyre (1) according to claim 6, **characterised in that** at least one of the elastomer profiles (17) - preferably all the elastomer profiles (17) - have a multiplicity of hollow chambers (17a, 17b, 17c) which extend substantially parallel to the circumferential direction and are filled with a magnetorheological liquid.

8. Vehicle pneumatic tyre (1) according to claim 1, having a carcass (5), belt plies (6) disposed in the region of the tread strip (8) and a binding (7) disposed radially externally of the carcass (5) and the belt plies (6), **characterised in that** the binding (7) contains a rubber mixture which contains a magnetorheological liquid.

9. Vehicle pneumatic tyre (1) according to claim 1, having a strip (8.1) which is formed substantially from rubber - subsequently called "base" (8.1) - underneath the cap (8.2) which contacts the ground in the contact area - subsequently called "cap" - of the tread strip (8), **characterised in that** the base (8.1) contains a rubber mixture which contains a magnetorheological liquid.

10. Vehicle pneumatic tyre (1) according to claim 1, having a single-layer tread strip (8), which is formed substantially from rubber and contacts the ground in the contact area, or having a tread strip cap (8.2), **characterised in that** the tread strip (8) or respectively the cap (8.2) contains a rubber mixture which contains a magnetorheological liquid.

11. Method for producing a vehicle pneumatic tyre (1) according to claim 1, which has at least one tyre component (4, 7, 8, 9, 17) containing a magnetorheological liquid, a rubber mixture being produced initially in one or more mixing stages for production of the tyre component (4, 7, 8, 9, 17) containing a magnetorheological liquid, said rubber mixture finally being extruded through a shaping extrusion nozzle (10), **characterised in that,** observed in the flow direction in front of the nozzle discharge opening (11), small injection channels (12) protrude into the rubber flow and through these a magnetorheological liquid is injected into the extrudate so that the extrudate has hollow chambers extending in the extrusion direction and filled with magnetorheological liquid without air bubbles, and **in that** then the tyre component (4, 7, 8, 9, 17) containing a magnetorheological liquid is used during construction of the vehicle pneumatic tyre (1).

12. Method according to claim 11, **characterised in that** the flow rate in the injection channels (12) is greater than the average rubber flow rate so that the hollow chambers (4a to 4e) filled with magnetorheological liquid have a greater cross-sectional area behind the injection channel than the injection channels (12).

13. Method for producing a vehicle pneumatic tyre (1) according to claim 1, which has at least one tyre component (4, 7, 8, 9, 17) containing a magnetorheological liquid, **characterised in that** one or more tubes (13) are inserted initially in the tyre component (4, 7, 8, 9, 17) for production of the tyre component (4, 7, 8, 9, 17) containing a magnetorheological liquid, said tubes having been filled preferably already before insertion with magnetorheological liquid, and **in that** then the tyre component (4, 7, 8, 9, 17) containing a magnetorheological liquid is used during construction of the vehicle pneumatic tyre (1).

14. Method for producing a vehicle pneumatic tyre (1) according to claim 1, which has at least one tyre component (4, 7, 8, 9, 17) containing a magnetorheological liquid, **characterised in that** one or more strips (14) formed from foamed elastomer are inserted initially into the tyre component (4, 7, 8, 9, 17) for production of the tyre component (4, 7, 8, 9, 17) containing a magnetorheological liquid, said strips having been preferably impregnated already before insertion with magnetorheological liquid, and **in that** then the tyre component (4, 7, 8, 9, 17) containing a magnetorheological liquid is used during construction of the vehicle pneumatic tyre (1).

15. Method for producing a vehicle pneumatic tyre (1) according to claim 1, which has at least one tyre component (4, 7, 8, 9, 17) containing a magnetorheological liquid, a rubber mixture being produced initially in one or more mixing stages for production of the tyre component (4, 7, 8, 9, 17) containing a magnetorheological liquid, **characterised in that -** preferably in the last mixing stage - a magnetorheological liquid is added to the rubber mixture and **in that** then the tyre component (4, 7, 8, 9, 17) containing a magnetorheological liquid is used during construction of the vehicle pneumatic tyre (1).

16. Method according to at least one of the claims 11 to 15, **characterised in that,** in order to prevent discharge of the magnetorheological liquid from tyre components (4, 7, 8, 9, 17), already filled with the latter, at cut end sides or porosities, at the latest at the time of production of the discharge risk, a magnetic field is formed such that the magnetorheological liquid is stiffened until the gravity drive does not suffice for flowing.

17. System, containing a vehicle pneumatic tyre (1) according to claim 1, which has at least one tyre component (4, 7, 8, 9, 17) containing a magnetorheological liquid, on a wheel rim (15) and at least one magnet **characterised in that,** in order to avoid or to keep low eddy currents in the tyre components (4, 7, 8, 9, 17), at least one - preferably annular - magnet (16a) is co-rotated with the wheel rim (15).

18. System according to claim 17, **characterised in that** the co-rotating magnets (16a) are permanent magnets and - preferably centrifugally controlled - adopt a position at high speed closer to the tyre components to be stiffened, preferably to both bead apex strips (4), than at low speeds.

19. System, containing a vehicle pneumatic tyre (1) according to claim 1, which has at least one tyre component (4, 7, 8, 9, 17) containing a magnetorheological liquid, on a wheel rim (15) and at least one magnet, **characterised in that** a magnetic field is formed in the vicinity of the wheel by at least one magnet (16b) which does not corotate and is located so close to at least one tyre component (4, 7, 8, 9, 17) containing a magnetorheological liquid, for example on an elastomer profile located between the belt edges and/or on a binding (7) and/or on a base and/or on a cap, that the tyre component(s) (4, 7, 8, 9, 17) containing the magnetorheological liquid is or are stiffened as a result of passing the magnetic field.

20. System according to claim 19, **characterised in that** the magnet or magnets (16b) is or are positioned in such a phase position before the contact area run-in that, during a long journey, the tyre component(s) (4, 7, 8, 9, 17) stiffened by the magnetic effect soften again substantially between passing the magnet (16b) or the magnets (16b) and the contact area run-in, but on the other hand at increased speed - using the inertia when the stiffening effect is subsiding - the components in a still stiffened state arrive at the contact area run-in - the phase position of the magnets (16b) being preferably chosen such that this boundary speed lies in the case of lorry tyres between 100 and 130 km/h, in the case of lorry tyres between 70 and 80 km/h - and with even more increasing speed, a region growing from the contact area run-in in the direction of the contact area run-out occurs still stiffened.

21. System according to claim 19 or 20, **characterised in that** the phase position and/or the strength of the non-rotating magnets (16b) is adjustable during travel.

22. Method according to one of the claims 19 to 21, **characterised in that** non-rotating magnets (16b) are electromagnets and their field strength which is effective in the tyre is adjusted by the electrical current strength.

23. System according to one of the claims 19 to 22, **characterised in that** the system has in addition to the non-co-rotating magnets (16b) a magnet (16a) which co-rotates with the wheel rim.

## Revendications

1. Pneumatique (1) de véhicule qui est constitué essentiellement de supports de résistance (3, 5, 6) et de différents éléments structurels en caoutchouc comme par exemple le bourrage sur tringle (4), la bande de roulement (8) et le flanc latéral (9),
**caractérisé en ce que** au moins un de ses éléments structurels en caoutchouc contient un liquide magnétorhéologique.

2. Pneumatique (1) de véhicule selon la revendication 1, comprenant des tringles (3) disposées dans les talons (2), des bourrages sur tringle (4) se trouvant par-dessus et une carcasse (5) enroulée autour des tringles (3), laquelle carcasse peut être renforcée par des nappes d'armature (6) dans la zone axiale de la bande de roulement (8),
**caractérisé en ce que** au moins un des deux bourrages sur tringle (4) est doté au moins d'une chambre creuse (4a) s'étendant essentiellement dans le sens circonférentiel, cette chambre creuse (4a) étant remplie d'un liquide magnétorhéologique.

3. Pneumatique (1) de véhicule selon la revendication 2, **caractérisé en ce que** la chambre creuse, qui est remplie d'un liquide magnétorhéologique, se trouve dans plusieurs enroulements, de sorte que la chambre creuse apparaît, dans une coupe transversale, comme un grand nombre de sections de spires (4a, 4b, 4c), où les enroulements s'étendent essentiellement dans le sens circonférentiel.

4. Pneumatique (1) de véhicule selon la revendication 2, **caractérisé en ce que** au moins un des deux bourrages sur tringle (4) comprend un grand nombre de chambres creuses (4a, 4b, 4c) qui s'étendent essentiellement dans le sens circonférentiel et sont remplies d'un liquide magnétorhéologique.

5. Pneumatique (1) de véhicule selon la revendication 1, comprenant deux flancs latéraux (9), **caractérisé en ce que** au moins un flanc latéral (9) se compose d'un mélange de caoutchouc, de préférence en une seule couche appliquée sur la face intérieure d'une carcasse (5), lequel mélange de caoutchouc contient un liquide magnétorhéologique.

6. Pneumatique (1) de véhicule selon la revendication 1, comprenant une carcasse (5) et au moins deux nappes d'armature (6) disposées au-dessous de la bande de roulement (8), nappes d'armature dont, de préférence, au moins une contient des supports de résistance non métalliques, où les bords des nappes sont maintenus écartés l'un de l'autre par une sculpture en élastomère (17) appropriée, sur un plus grand intervalle radial que la zone centrale des nappes d'armature, **caractérisé en ce que** au moins une des sculptures en élastomère (17) - de préférence toutes les sculptures en élastomères (17) - espaçant, dans la zone des bords, les nappes d'armature (6), contient un mélange de caoutchouc qui contient un liquide magnétorhéologique.

7. Pneumatique (1) de véhicule selon la revendication 6, **caractérisé en ce que** au moins une des sculptures en élastomère (17) - de préférence toutes les sculptures en élastomère (17) - contient un grand nombre de chambres creuses (17a, 17b, 17c) qui s'étendent essentiellement de façon parallèle au sens circonférentiel et sont remplies d'un liquide magnétorhéologique.

8. Pneumatique (1) de véhicule selon la revendication 1, comprenant une carcasse (5), des nappes d'armature (6) disposées dans la zone de la bande de roulement (8) et un bandage pneumatique (7) disposé à l'extérieur, radialement, de la carcasse (5) et des nappes d'armature (6), **caractérisé en ce que** le bandage pneumatique (7) contient un mélange de caoutchouc qui contient un liquide magnétorhéologique.

9. Pneumatique (1) de véhicule selon la revendication 1, comprenant une bande (8.1) - appelée ci-après "base" (8.1) - se composant essentiellement de caoutchouc, placée au-dessous du sommet (8.2) - appelé ci-après "cap" (8.2) - de la bande de roulement (8) touchant le sol au moment de l'aplatissement, **caractérisé en ce que** la base (8.1) contient un mélange de caoutchouc qui contient un liquide magnétorhéologique.

10. Pneumatique (1) de véhicule selon la revendication 1, comprenant une bande de roulement (8) monocouche se composant essentiellement de caoutchouc et touchant le sol au moment de l'aplatissement, ou comprenant un sommet (cap 8.2) de la bande de roulement, **caractérisé en ce que** la bande de roulement (8) ou le sommet (cap 8.2) contient un mélange de caoutchouc qui contient un liquide magnétorhéologique.

11. Procédé de fabrication d'un pneumatique (1) de véhicule selon la revendication 1, qui comprend au moins une partie constitutive du pneu (4, 7, 8, 9, 17) contenant un liquide magnétorhéologique où, pour la fabrication de la partie constitutive du pneu (4, 7, 8, 9, 17) contenant un liquide magnétorhéologique, on détermine d'abord dans une ou plusieurs étapes de mélange, un mélange de caoutchouc qui est extrudé finalement par une buse d'extrusion (10) donnant une forme, **caractérisé en ce qu'**en regardant dans le sens de l'écoulement, en amont de l'ouverture de sortie (11) de la buse, des petits canaux d'injection (12) pénètrent dans le flux de caoutchouc,. un liquide magnétorhéologique étant injecté dans le produit d'extrusion par ces canaux d'injection, de sorte que le produit d'extrusion comprend des chambres creuses remplies d'un liquide magnétorhéologique, s'étendant sans bulles d'air dans le sens d'extrusion, et **en ce que** la partie constitutive du pneu (4, 7, 8, 9, 17) contenant un liquide magnétorhéologique est alors utilisée au cours de la construction du pneumatique (1) de véhicule.

12. Procédé selon la revendication 11, **caractérisé en ce que** la vitesse d'écoulement dans les canaux d'injection (12) est plus élevée que la vitesse moyenne d'écoulement du caoutchouc, de sorte que les chambres creuses (4a à 4e) remplies d'un liquide magnétorhéologique ont, en aval du canal d'injection, une plus grande surface de section que les canaux d'injection (12).

13. Procédé de fabrication d'un pneumatique (1) de véhicule selon la revendication 1, qui comprend au moins une partie constitutive du pneu (4, 7, 8, 9, 17) contenant un liquide magnétorhéologique, **caractérisé en ce que**, pour la fabrication de la partie constitutive du pneu (4, 7, 8, 9, 17) contenant un liquide magnétorhéologique, on introduit d'abord, dans la partie constitutive du pneu (4, 7, 8, 9, 17), un ou plusieurs tuyaux souples (13) qui, de préférence, sont déjà remplis d'un liquide magnétorhéologique avant de les introduire, et **en ce que** la partie constitutive du pneu (4, 7, 8, 9, 17) contenant un liquide magnétorhéologique est alors utilisée au cours de la construction du pneumatique (1) de véhicule.

14. Procédé de fabrication d'un pneumatique (1) de véhicule selon la revendication 1, qui comprend au moins une partie constitutive du pneu (4, 7, 8, 9, 17) contenant un liquide magnétorhéologique, **caractérisé en ce que**, pour la fabrication de la partie constitutive du pneu (4, 7, 8, 9, 17) contenant un liquide magnétorhéologique, on introduit d'abord, dans la partie constitutive du pneu (4, 7, 8, 9, 17), une ou plusieurs bandes (14) d'élastomère expansé, lesquelles bandes sont, de préférence, avant de les introduire, déjà imbibées d'un liquide magnétorhéologique, et **en ce que** la partie constitutive du pneu (4, 7, 8, 9, 17) contenant un liquide magnétorhéologique est alors utilisée au cours de la construction du pneumatique (1) de véhicule.

15. Procédé de fabrication d'un pneumatique (1) de véhicule selon la revendication 1, qui comprend au moins une partie constitutive du pneu (4, 7, 8, 9, 17) contenant un liquide magnétorhéologique où, pour la fabrication de la partie constitutive du pneu (4, 7, 8, 9, 17) contenant un liquide magnétorhéologique, on détermine d'abord un mélange de caoutchouc, en procédant suivant une ou plusieurs étapes de mélange, **caractérisé en ce que** - de préférence au cours de la dernière étape de mélange - un liquide magnétorhéologique est ajouté au mélange en caoutchouc, et **en ce que** la partie constitutive du pneu (4, 7, 8, 9, 17) contenant un liquide magnétorhéologique est alors utilisée au cours de la construction du pneumatique (1) de véhicule.

16. Procédé selon au moins l'une quelconque des revendications 11 à 15, **caractérisé en ce que**, pour empêcher un liquide magnétorhéologique de déborder de parties constitutives du pneu (4, 7, 8, 9, 17) déjà remplies de ce liquide, au niveau de faces frontales coupées ou au niveau de porosités se formant au plus tard au moment de l'apparition du risque de débordement, est constitué un champ magnétique d'un type qui épaissit tellement le liquide magnétorhéologique que la commande par gravité n'est pas suffisante pour déclencher l'écoulement.

17. Système contenant un pneumatique (1) de véhicule selon la revendication 1, lequel pneumatique comprend au moins une partie constitutive du pneu (4, 7, 8, 9, 17) contenant un liquide magnétorhéologique, sur une jante (15) et au moins un aimant, **caractérisé en ce que**, pour éviter ou pour maintenir à un faible niveau les phénomènes de tourbillons dans les parties constitutives du pneu (4, 7, 8, 9, 17), au moins un aimant (16a) - de préférence de forme annulaire - est entraîné en rotation en même temps que la jante (15).

18. Système selon la revendication 17, **caractérisé en ce que** les aimants (16a) entraînés en co-rotation sont des aimants permanents et - de préférence commandés par la force centrifuge - prennent, à grande vitesse, une position plus près des parties constitutives du pneu se renforçant, de préférence plus près des deux bourrages sur tringle (4) que dans le cas de vitesses lentes.

19. Système contenant un pneumatique (1) de véhicule selon la revendication 1, lequel pneumatique comprend au moins une partie constitutive du pneu (4, 7, 8, 9, 17) contenant un liquide magnétorhéologique, sur une jante (15) et au moins un aimant, **caractérisé en ce qu'**un champ magnétique est constitué, à proximité de la roue, par au moins un aimant (16b) qui n'est pas entraîné en co-rotation et se trouve si près d'au moins une partie constitutive du pneu (4, 7, 8, 9, 17) contenant un liquide magnétorhéologique, par exemple près d'une sculpture en élastomère se trouvant entre les bords des nappes d'armature et/ou près d'un bandage pneumatique (7) et/ou d'une base et/ou d'un sommet (cap), **en ce que** la ou les partie(s) constitutive(s) du pneu (4, 7, 8, 9, 17) contenant un liquide magnétorhéologique se renforce(nt) suite au passage dans le champ magnétique.

20. Système selon la revendication 19, **caractérisé en ce que** l'aimant ou les aimants (16b) est ou sont positionné(s) avant le début de l'aplatissement lors du contact avec le sol, dans une position de phase telle, que la ou les partie(s) constitutive(s) du pneu (4, 7, 8, 9, 17) renforcée(s) par l'effet magnétique, à vitesse lente, se ramollisse(nt) à nouveau essentiellement entre le passage de l'aimant (16b) ou des aimants (16b) et le début de l'aplatissement lors du contact avec le sol, les parties constitutives du pneu, par contre, à vitesse croissante, sont encore dans l'état renforcé au début de l'aplatissement lors du contact avec le sol - en exploitant l'inertie au cours de l'amortissement de l'effet de renforcement -, où la position de phase des aimants (16b) est choisie de préférence de façon telle, que cette vitesse limite est comprise entre 100 km/h et 130 km/h pour des pneumatiques de véhicules de tourisme et entre 70 km/h et 80 km/h pour des pneumatiques de poids lourds, et dans le cas d'une vitesse qui augmente encore, il existe une plage croissante, encore renforcée, allant du début de l'aplatissement lors du contact avec le sol jusqu'à la fin de l'aplatissement lors du contact avec le sol.

21. Système selon la revendication 19 ou 20, **caractérisé en ce que** la position de phase et/ou la puissance des aimants (16b) non rotatifs est réglable en cours de route.

22. Procédé selon l'une quelconque des revendications 19 à 21, **caractérisé en ce que** des aimants non rotatifs (16b) sont des électroaimants dont l'intensité du champ efficace dans le pneumatique est réglée par l'intensité du courant électrique.

23. Système selon l'une quelconque des revendications 19 à 22, **caractérisé en ce que** le système comprend, en plus de l'aimant (16b) non entraîné en co-rotation, un aimant (16a) entraîné en rotation en même temps que la jante.
